# EUROPEAN PATENT APPLICATION

(11) **EP 4 582 309 A1**
(43) Date of publication of application: **09.07.2025**
(21) Application number: 23859364.4
(22) Date of filing: 30.08.2023
(51) Int. Cl.: B60N 2/28, B62B 7/08, B62B 9/12, B62B 9/00

(54) **AUTOMOBILE SAFETY SEAT AND ASSEMBLE AND DISASSEMBLE METHOD FOR CARRYCOT THEREOF, AND CHILD STROLLER**

(30) Priority: 30.08.2022 CN 202211046365; 30.08.2022 CN 202222293728 U; 30.08.2022 CN 202211047807; 30.08.2022 CN 202222308870 U
(71) Applicant: Goodbaby Child Products Co., Ltd., Kunshan, Jiangsu 215331 (CN)
(72) Inventor: KEEGAN, Charles Henry, Suzhou, Jiangsu 215331 (CN); FENG, Bo, Suzhou, Jiangsu 215331 (CN); LV, Wenlong, Suzhou, Jiangsu 215331 (CN); YANG, Xiaoyong, Suzhou, Jiangsu 215331 (CN)
(74) Representative: Murgitroyd & Company
(86) International application number: PCT/CN2023/115629
(87) International publication number: WO 2024/046335

(57) **Abstract**

An automobile safety seat, comprising a base (1), a stroller frame (2) arranged on the base (1) after being folded, and a carrycot (3) arranged on the stroller frame (2). The automobile safety seat further comprises a first locking mechanism (4) used for locking the carrycot (3) on the folded stroller frame (2), a second locking mechanism (5) also used for locking the carrycot (3) on the folded stroller frame (2), and a third locking mechanism (9) used for locking the stroller frame (2) on the base (1), wherein an engagement and disengagement device (6) is arranged between the first locking mechanism (4) and the second locking mechanism (5). When the carrycot, the base and the stroller frame are used as the automobile safety seat, the first locking mechanism (4), the second locking mechanism (5) and the third locking mechanism (9) are linked by means of the engagement and disengagement device (6), such that it is possible to simultaneously control a plurality of locking mechanisms by means of the operation of an unlocking handle (41), and thus locking and unlocking processes are simple, and the carrycot (3) is convenient to put therein and take out therefrom; and when the carrycot, the base and the stroller frame are used as the child stroller, the carrycot (3) can be completely locked to the stroller frame (2), such that the safety of the child stroller is improved, thereby reducing the risk of misuse. Further disclosed are an assemble and disassemble method for a carrycot of the automobile safety seat, and a child stroller.

## Description

### CROSS-REFERENCE TO RELATED APPLICATIONS

The present disclosure claims priority to Chinese Patent Application Nos. CN2022110463659, CN2022222937280, CN2022110478071 and CN2022223088708 filed on August 30, 2022.

### FIELD OF TECHNOLOGY

The present disclosure belongs to the field of children product technologies, and in particular, to an automobile safety seat, an assembling and disassembling method for a carrycot of an automobile safety seat, and a child stroller.

### BACKGROUND

In order to meet requirements of parents and children, a child carrycot is generally mounted on a child stroller or a child automobile safety seat when the child is little. The child carrycot may alternatively be carried alone. However, when the child carrycot in the conventional art is mounted on the child automobile safety seat, its locking or unlocking operations are cumbersome, the child carrycot is inconvenient to put therein and take out therefrom, and the locking may not be firm. When a user removes the carrycot separately, it is likely to unlock a stroller frame and a base. When the carrycot is mounted next time, it is likely to mount the carrycot directly on the base, making the mounting difficult or even impossible. When the child carrycot is mounted on a frame of the child stroller, the child carrycot cannot be completely locked to the frame, the safety is poor, and misuse may be caused, resulting in poor user experience of the user.

### SUMMARY

The present disclosure relates to an improved automobile safety seat and an assembling and disassembling method for a carrycot thereof, and a child stroller. When the carrycot, the stroller frame and the base constitute the automobile safety seat, its locking and unlocking operations are simple, and the carrycot is convenient to put therein and take out therefrom. When the carrycot and the stroller frame constitute a child stroller, the carrycot can be completely locked to the stroller frame, such that the safety of the child stroller is improved, thereby reducing the risk of misuse.

A first aspect of the present disclosure provides an automobile safety seat, which includes a base, a stroller frame being folded and arranged on the base, and a carrycot arranged on the stroller frame;
the automobile safety seat further comprises a first locking mechanism for locking the carrycot on the stroller frame being folded, a second locking mechanism also for locking the carrycot on the stroller frame being folded, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism or the second locking mechanism is independently in the locking state or the unlocking state. When the carrycot, the stroller frame and the base are combined as the automobile safety seat, the first locking mechanism, the second locking mechanism and the third locking mechanism are linked by the engaging and disengaging device, such that it is possible to simultaneously control a plurality of locking mechanisms by the operation of an unlocking handle, and thus locking and unlocking operations are simple, and the carrycot is convenient to put therein and take out therefrom.

**In** some embodiments, the first locking mechanism includes:
an unlocking handle, arranged on the carrycot;
a first locking member, rotatably connected to a rear portion of the carrycot by a first rotating shaft;
a first elastic member, abutting against the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the stroller frame by a second rotating shaft;
a second elastic member, abutting against the second locking member;
a first driving member, movably arranged on a front portion of the carrycot, and the first driving member being capable of driving the second locking member to move; and
a second connecting member, two ends of the second connecting member being respectively connected to the unlocking handle and the first driving member, the unlocking handle driving the first driving member to move by the second connecting member, such that the first driving member also drives the second locking member to rotate;
wherein the stroller frame comprises a front wheel bracket and a rear wheel bracket, and a lower portion of the rear wheel bracket is rotatably connected to a rear wheel by a rear wheel axle;
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member abuts against the second locking member, and the second locking member is detached from the front wheel bracket; and when the unlocking handle is pulled, the first locking mechanism switches from the locking state to the unlocking state.

**In** some embodiments, the first driving member is rotatably connected to the front portion of the carrycot by means of a third rotating shaft.

**In** some embodiments, the automobile safety seat further includes the second locking mechanism also used for locking the carrycot on the stroller frame, the second locking mechanism includes:
a first locking slider, slidably arranged at a bottom of the carrycot along a front-rear direction, a fourth locking member is arranged on a front portion of the first locking slider, and a fifth locking member is arranged on a rear portion of the first locking slider;
a fourth elastic member, abutting against the first locking slider;
a first locking rod, fixedly arranged on the front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism switches between the locking state and the unlocking state, the first locking slider slides along the bottom of the carrycot; and the fourth elastic member applies an elastic force to the first locking slider, such that the second locking mechanism tends to be switched to the locking state.

In some embodiments, the engaging and disengaging device is arranged between the first locking slider and the first connecting member or the unlocking handle, when the folded stroller frame is placed on the base and the carrycot is placed on the stroller frame, the engaging and disengaging device is in the operating state of engaging, the first locking slider is connected to the first connecting member or the unlocking handle, and the unlocking handle is capable of driving the first locking slider to slide, such that the first locking mechanism and the second locking mechanism are synchronously switched from the locking state to the unlocking state or the first locking mechanism and the second locking mechanism are synchronously switched from the unlocking state to the locking state; when the first locking mechanism and the second locking mechanism are both in the unlocking state, the carrycot is allowed to be detached from the stroller frame; and after the carrycot is detached from the base along with the stroller frame, the engaging and disengaging device is in the operating state of disengaging, the first locking slider is disconnected from the first connecting member or the unlocking handle, and the unlocking handle is incapable of driving the first locking slider to slide, such that the first locking mechanism and the second locking mechanism are independently in the locking state or the unlocking state.

In some embodiments, the engaging and disengaging device includes:
a sixth locking member, slidably arranged in the first locking slider along an up-down direction;
a fourth connecting member, provided with a locking hole, and the fourth connecting member being the first connecting member;
a fifth elastic member, abutting against the sixth locking member, and the fifth elastic member applying an elastic force in one direction to the sixth locking member, the elastic force in the direction causing the sixth locking member to tend to be detached from the locking hole; and
a second driving member for driving the sixth locking member to slide in a direction of insertion into the locking hole;
wherein when the carrycot is placed on the base along with the folded stroller frame, the second driving member pushes the sixth locking member to slide upward, such that one part of the sixth locking member is inserted into the locking hole in the fourth connecting member and the other part of the sixth locking member is still located in the first locking slider, and the engaging and disengaging device is in the operating state of engaging; and after the carrycot is detached from the base along with the stroller frame, the sixth locking member slides downward under the elastic force of the fifth elastic member, the sixth locking member is detached from the locking hole in the fourth connecting member, and the engaging and disengaging device is in the operating state of disengaging.

In some embodiments, the stroller frame further includes a carrycot tray, the carrycot tray is connected to the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along the up-down direction, an upper end of the trigger push rod is oriented toward a lower end of the sixth locking member; when the carrycot is placed on the base along with the stroller frame, a lower end of the trigger push rod contacts an upper surface of the base, causing the trigger push rod to move upward, the trigger push rod also pushes the sixth locking member to move upward and be inserted into the locking hole, and the engaging and disengaging device is in the operating state of engaging; and after the carrycot is detached from the base along with the stroller frame, the sixth locking member slides downward under the elastic force of the fifth elastic member, the lower end of the trigger push rod is pushed to protrude out of a lower bottom surface of the carrycot tray downwardly, and the engaging and disengaging device is in the operating state of disengaging.

In some embodiments, the trigger push rod further abuts against a sixth elastic member, the sixth elastic member applying an elastic force to the trigger push rod so that the lower end of the trigger push rod tends to protrude towards the bottom of the carrycot tray.

In some embodiments, at least two front wheel brackets and at least two rear wheel brackets on left and right sides are respectively provided, the front wheel bracket further includes a first transverse rod used for connecting the two front wheel brackets on the left and right sides, the first transverse rod being provided with a locking groove, when the first locking mechanism is in the locking state, the second locking member is hooked in the locking groove, and when the first locking mechanism is in the unlocking state, the second locking member is detached from the locking groove.

In some embodiments, the stroller frame further includes a carrycot tray, the carrycot tray being connected to the front wheel bracket and/or the rear wheel bracket, the carrycot is arranged on the carrycot tray, and at least part of the carrycot is located above the carrycot tray; and the automobile safety seat further includes a third locking mechanism used for locking the stroller frame on the base, the third locking mechanism includes:
a second locking slider, slidably arranged at a bottom of the carrycot tray along a front-rear direction, a seventh locking member being arranged on a front portion of the second locking slider;
a third driving member for driving the second locking slider to slide in the carrycot tray along the front-rear direction;
a seventh elastic member, abutting against the second locking slider;
a third locking rod, extending along a left-right direction and being fixedly arranged on a front portion of the base;
an eighth locking member, rotatably connected to a rear portion of the base by means of a fifth rotating shaft;
an eighth elastic member, abutting against the eighth locking member; and
a fifth connecting member, a front portion of the fifth connecting member being connected to the second locking slider, and a rear portion of the fifth connecting member being connected to the eighth locking member; and
wherein the third locking mechanism has a locking state and an unlocking state, and when the third locking mechanism is in the locking state, the seventh locking member hooks the third locking rod, and the eighth locking member hooks the rear wheel axle or the rear wheel bracket; and when the third locking mechanism is in the unlocking state, the seventh locking member is detached from the third locking rod, and the eighth locking member is detached from the rear wheel axle or the rear wheel bracket.

In some embodiments, a front lower portion of the seventh locking member has a guide slope, the guide slope is parallel to the third locking rod and the guide slope tilts forward gradually from top to bottom and, and the seventh locking member is located on a front lower side of the third locking rod. In some embodiments, a safety mechanism is arranged on the second locking slider, when the safety mechanism is in an open state, the second locking slider is allowed to slide such that the third locking mechanism switches to the unlocking state from the locking state, and when the safety mechanism is in a closed state, the second locking slider is prohibited from sliding such that the third locking mechanism is in the locking state.

In some embodiments, the safety mechanism includes:
a stop rod, slidably inserted into the carrycot tray along an up-down direction; and
a stop rod elastic member, abutting against the stop rod, and the stop rod elastic member applying an elastic force to the stop rod so that the stop rod tends to slide upward;
wherein when the safety mechanism is in the closed state, an upper end of the stop rod extrudes out of an upper surface of the carrycot tray upwardly, and a side portion of the stop rod blocks sliding of the second locking slider; and when the safety mechanism is in the open state, the upper end of the stop rod is retracted into the upper surface of the carrycot tray, and the side portion of the stop rod is located below the second locking slider and allows the second locking slider to slide.

In some embodiments, the carrycot has two operating states of detaching from the carrycot tray and mounting on the carrycot tray; after the carrycot is detached from the carrycot tray, the safety mechanism is in the closed state, and the upper end of the stop rod extrudes out of the upper surface of the carrycot tray upwardly; and after the carrycot is mounted on the carrycot tray, a bottom surface of the carrycot presses down the upper end of the stop rod to make the stop rod slide downward, and the safety mechanism is in the open state.

In some embodiments, the first connecting member and the second connecting member are both flexible plastic straps; and the unlocking handle is slidably arranged on a front lower portion of the carrycot.

A second aspect of the present disclosure provides an automobile safety seat, including a base, a stroller frame being folded and arranged on the base, a carrycot arranged on the stroller frame, and a third locking mechanism for locking the folded stroller frame on the base, wherein the third locking mechanism has a locking state and an unlocking state, when the third locking mechanism is in the locking state, the stroller frame is prohibited from being separated from the base, and when the third locking mechanism is in the unlocking state, the stroller frame is allowed to be separated from the base; wherein the third locking mechanism is further provided with a safety mechanism, when the safety mechanism is in an open state, the third locking mechanism is allowed to be switched to the unlocking state from the locking state, and when the safety mechanism is in a closed state, the third locking mechanism is prohibited from being switched to the unlocking state from the locking state. When the safety mechanism is in the open state, the third locking mechanism is allowed to enter the unlocking state from the locking state. When the safety mechanism is in the closed state, the third locking mechanism is prohibited from entering the unlocking state from the locking state. When the carrycot, the stroller frame and the base are combined as the automobile safety seat, the stroller frame and the base are locked by means of the third locking mechanism, preventing a user from mistakenly mounting the carrycot directly on the base.

In some embodiments, the stroller frame further includes a front wheel bracket and a rear wheel bracket, the stroller frame being folded further includes a carrycot tray, the carrycot tray is connected to the front wheel bracket and/or the rear wheel bracket, the carrycot is detachably arranged on the carrycot tray, and at least part of the carrycot is located above the carrycot tray.

In some embodiments, the third locking mechanism has a second locking slider, the second locking slider being slidably arranged at the bottom of the carrycot tray along a front-rear direction; when the second locking slider slides forward or backward along the carrycot tray, the third locking mechanism switches between the locking state and the unlocking state; and the safety mechanism is arranged on the carrycot tray, when the safety mechanism is in the open state, the second locking slider is allowed to slide so that the third locking mechanism enters the unlocking state from the locking state, and when the safety mechanism is in the closed state, the second locking slider is prohibited from sliding so that the third locking mechanism is in the locking state.

In some embodiments, the safety mechanism includes:
a stop rod, slidably inserted into the carrycot tray along an up-down direction; and
a stop rod elastic member, connected to the stop rod, and the stop rod elastic member applying an elastic force to the stop rod such that the stop rod tends to slide upward;
wherein when the safety mechanism is in the closed state, an upper end of the stop rod upwardly extrudes out of an upper surface of the carrycot tray, and a side portion of the stop rod blocks sliding of the second locking slider; and when the safety mechanism is in the open state, the upper end of the stop rod is retracted into the upper surface of the carrycot tray, and the side portion of the stop rod is located below the second locking slider and allows the second locking slider to slide.

In some embodiments, the carrycot has two operating states of detaching from the carrycot tray and mounting on the carrycot tray; after the carrycot is detached from the carrycot tray, the safety mechanism is in the closed state, and the upper end of the stop rod upwardly extrudes out of the upper surface of the carrycot tray; and after the carrycot is mounted on the carrycot tray, a bottom surface of the carrycot presses down the upper end of the stop rod to slide the stop rod downward, and the safety mechanism is in the open state.

In some embodiments, the third locking mechanism further includes:
a seventh locking member, located in a front portion of the second locking slider;
a seventh elastic member, connected to the second locking slider;
a third locking rod, extending along a left-right direction and being fixedly arranged on a front portion of the base;
an eighth locking member, rotatably connected to a rear portion of the base by a fifth rotating shaft; an eighth elastic member, connected to the eighth locking member; and
a fifth connecting member, a front portion of the fifth connecting member being connected to the second locking slider, and a rear portion of the fifth connecting member being connected to the eighth locking member; and
the stroller frame includes a front wheel bracket and a rear wheel bracket, and a lower portion of the rear wheel bracket being rotatably connected to a rear wheel by a rear wheel axle;
wherein when the third locking mechanism is in the locking state, the seventh locking member hooks the third locking rod, the eighth locking member hooks the rear wheel axle or the rear wheel bracket, and the stroller frame is locked on the base; and when the third locking mechanism is in the unlocking state, the seventh locking member is detached from the third locking rod, and the eighth locking member is detached from the rear wheel axle or the rear wheel bracket, to allow the stroller frame to be detached from the base.

In some embodiments, the automobile safety seat further includes a first locking mechanism used for locking the carrycot on the folded stroller frame, the first locking mechanism includes:
an unlocking handle, arranged on the carrycot;
a first locking member, rotatably connected to a rear portion of the carrycot by means of a first rotating shaft;
a first elastic member, connected to the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the carrycot by a second rotating shaft;
a second elastic member, connected to the second locking member;
a first driving member, movably arranged on the front portion of the carrycot; and
a second connecting member, two ends of the second connecting member being respectively connected to the unlocking handle and the first driving member, the unlocking handle driving the first driving member to move by the second connecting member, such that the first driving member also drives the second locking member to rotate;
wherein the stroller frame comprises a front wheel bracket and a rear wheel bracket, and a lower portion of the rear wheel bracket is rotatably connected to a rear wheel by a rear wheel axle;
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member is connected to the second locking member, and the second locking member is detached from the front wheel bracket; and when the unlocking handle is pulled, the first locking mechanism is switched from the locking state to the unlocking state.

In some embodiments, the first driving member is rotatably connected to the front portion of the carrycot by means of a third rotating shaft.

In some embodiments, the automobile safety seat further includes a second locking mechanism also used for locking the carrycot on the stroller frame, the second locking mechanism includes:
a first locking slider, slidably arranged at the bottom of the carrycot along a front-rear direction, a fourth locking member is arranged on a front portion of the first locking slider, and a fifth locking member is arranged on a rear portion of the first locking slider;
a fourth elastic member, connected to the first locking slider;
a first locking rod, fixedly arranged on a front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism is switched between the locking state and the unlocking state, the first locking slider slides along the bottom of the carrycot; and the fourth elastic member applies an elastic force to the first locking slider, such that the second locking mechanism tends to be switched to the locking state.

In some embodiments, an engaging and disengaging device is arranged between the first locking slider and the first connecting member or the unlocking handle, when the folded stroller frame is placed on the base and the carrycot is placed on the stroller frame, the engaging and disengaging device is in an operating state of engaging, the first locking slider is connected to the first connecting member or the unlocking handle, and the unlocking handle drives the first locking slider to slide, so that the first locking mechanism and the second locking mechanism synchronously switch from the locking state to the unlocking state or the first locking mechanism and the second locking mechanism synchronously switch from the unlocking state to the locking state; when the first locking mechanism and the second locking mechanism are both in the unlocking state, the carrycot is allowed to be detached from the stroller frame; and after the stroller frame drives the carrycot to be detached from the base, the engaging and disengaging device is in an operating state of disengaging, the first locking slider is disconnected from the first connecting member or the unlocking handle, and the unlocking handle is incapable of driving the first locking slider to slide, so that the first locking mechanism and the second locking mechanism are independently in the locking state or the unlocking state, and when the second locking mechanism is in the locking state, the carrycot is incapable of being detached from the stroller frame.

In some embodiments, the engaging and disengaging device includes:
a sixth locking member, slidably arranged in the first locking slider along an up-down direction;
a fourth connecting member, provided with a locking hole, and the fourth connecting member being the first connecting member;
a fifth elastic member, connected to the sixth locking member, and the fifth elastic member applying an elastic force in one direction to the sixth locking member, the elastic force in the direction causing the sixth locking member to tend to be detached from the locking hole; and
a second driving member for driving the sixth locking member to slide in a direction of insertion into the locking hole;
wherein when the folded stroller frame drives the carrycot to be placed on the base, the second driving member pushes the sixth locking member to slide upward, so that one part of the sixth locking member is inserted into the locking hole in the fourth connecting member and the other part of the sixth locking member is still located in the first locking slider, and the engaging and disengaging device is in the operating state of engaging; and after the stroller frame drives the carrycot to be detached from the base, the sixth locking member slides downward under the elastic force of the fifth elastic member, the sixth locking member is detached from the locking hole in the fourth connecting member, and the engaging and disengaging device is in the operating state of disengaging.

In some embodiments, the stroller frame further includes a carrycot tray, the carrycot tray is connected to the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along the up-down direction, an upper end of the trigger push rod is oriented toward a lower end of the sixth locking member; when the stroller frame drives the carrycot to be placed on the base, a lower end of the trigger push rod is extruded by an upper surface of the base, causing the trigger push rod to move upward, the trigger push rod also pushes the sixth locking member to move upward and be inserted into the locking hole, and the engaging and disengaging device is in the operating state of engaging; and after the stroller frame drives the carrycot to be detached from the base, the sixth locking member slides downward under the elastic force of the fifth elastic member, the lower end of the trigger push rod is pushed to downwardly extend out of a lower bottom surface of the carrycot tray, and the engaging and disengaging device is in the operating state of disengaging.

In some embodiments, the trigger push rod is further connected to a sixth elastic member, the sixth elastic member applying an elastic force to the trigger push rod so that the lower end of the trigger push rod tends to protrude towards the bottom of the carrycot tray.

In some embodiments, the stroller frame includes at least two front wheel brackets on left and right sides respectively and at least two rear wheel brackets on the left and right sides respectively, the front wheel bracket further includes a first transverse rod used for connecting the two front wheel brackets on the left and right sides, a locking groove is arranged on the first transverse rod, when the first locking mechanism is in the locking state, the second locking member is hooked in the locking groove, and when the first locking mechanism is in the unlocking state, the second locking member is detached from the locking groove.

In some embodiments, the first connecting member and the second connecting member are both flexible plastic straps; and the unlocking handle is slidably arranged on a front lower portion of the carrycot.

A third aspect of the present disclosure provides an automobile safety seat, including a base, a stroller frame being folded and arranged on the base, and a carrycot arranged on the stroller frame; wherein the stroller frame includes a front wheel bracket and a rear wheel bracket, at least two front wheel brackets and at least two rear wheel brackets on left and right sides are respectively provided, the front wheel bracket further includes a first transverse rod for connecting the two front wheel brackets on the left and right sides, and the rear wheel bracket further includes a second transverse rod for connecting the two rear wheel brackets on the left and right sides; wherein the automobile safety seat further includes a first locking mechanism for locking the carrycot on the folded stroller frame and a third locking mechanism for locking the stroller frame on the base; the first locking mechanism includes:
an unlocking handle, arranged on the carrycot;
a first locking member, rotatably connected to a rear portion of the carrycot by a first rotating shaft;
a first elastic member, connected to the first locking member; and
a first connecting member, two ends of the first connecting member being respectively connected to the unlocking handle and the first locking member, the unlocking handle driving the first locking member to rotate by the first connecting member;
wherein the first locking mechanism has a locking state and an unlocking state, and when the first locking mechanism is in the locking state, the first locking member is hooked to the second transverse rod; when the first locking mechanism is in the unlocking state, the first locking member is detached from the second transverse rod; the first elastic member applies an elastic force to the first locking member, so that the first locking member rotates around the first rotating shaft in a direction where the second transverse rod tends to be hooked; and when the unlocking handle is pulled, the first locking mechanism is switched from the locking state to the unlocking state; and
the third locking mechanism includes:
   an eighth locking member, rotatably connected to a rear portion of the base by a fifth rotating shaft;
   an eighth elastic member, connected to the eighth locking member; and
   a fourth driving member, connected to or in contact with the eighth locking member, the fourth driving member being used for driving the eighth locking member to rotate;
   wherein the third locking mechanism has a locking state and an unlocking state, and when the third locking mechanism is in the locking state, the eighth locking member is hooked to the second transverse rod; when the third locking mechanism is in the unlocking state, the eighth locking member is detached from the second transverse rod; the eighth elastic member applies an elastic force that tends to hook the second transverse rod to the eighth locking member; and when the fourth driving member drives the eighth locking member to rotate, the third locking mechanism is switched from the locking state to the unlocking state. When the carrycot, the stroller frame and the base are combined as the automobile safety seat, the carrycot is controlled to be locked to the folded stroller frame by means of the first locking mechanism, and the stroller frame is locked to the base by means of the third locking mechanism. The structure is simple, locking and unlocking operations are simple, and the carrycot is convenient to put therein and take out therefrom.

In some embodiments, the first locking member is located on a rear side of the second transverse rod, and the eighth locking member is located on a front side of the second transverse rod; and a lower portion of the rear wheel bracket is rotatably connected to a rear wheel by a rear wheel axle, and the second transverse rod is the rear wheel axle.

In some embodiments, the first locking mechanism and the third locking mechanism are the first locking mechanism and the third locking mechanism in the automobile safety seat in the first aspect above.

In some embodiments, the automobile safety seat further includes a second locking mechanism also for locking the carrycot on the folded stroller frame, the second locking mechanism including a first locking slider, the first locking slider is slidably arranged at the bottom of the carrycot along a front-rear direction; an engaging and disengaging device is arranged between the first locking slider and the first connecting member or the unlocking handle; and the second locking mechanism and the engaging and disengaging device are the second locking mechanism and the engaging and disengaging device in the automobile safety seat in the first aspect above.

A fourth aspect of the present disclosure provides an automobile safety seat, including a base, a stroller frame being folded and arranged on the base, and a carrycot arranged on the stroller frame;
the stroller frame including a front wheel bracket and a rear wheel bracket, a lower portion of the rear wheel bracket being connected to a rear wheel by means of a rear wheel axle; wherein the automobile safety seat further includes a first locking mechanism for locking the carrycot on the folded stroller frame; the first locking mechanism includes:
an unlocking handle, arranged on the carrycot;
a first locking member, rotatably connected to a rear portion of the carrycot by means of a first rotating shaft;
a first elastic member, connected to the first locking member;
a first connecting member, two ends of the first connecting member being respectively connected to the unlocking handle and the first locking member, the unlocking handle driving, by the first connecting member, the first locking member to rotate;
a second locking member, rotatably connected to a front portion of the stroller frame by means of a second rotating shaft;
a second elastic member, connected to the second locking member;
a first driving member, movably arranged on a front portion of the carrycot, and the first driving member being capable of driving the second locking member to move; and
a second connecting member, two ends of the second connecting member being respectively connected to the unlocking handle and the first driving member, the unlocking handle driving, by the second connecting member and the first driving member, the second locking member to rotate;
a third locking member, rotatably connected to a middle portion of the carrycot by means of a fourth rotating shaft;
a third elastic member, connected to the third locking member; and
a third connecting member, two ends of the third connecting member being respectively connected to the unlocking handle and the third locking member, the unlocking handle driving, by the third connecting member, the third locking member to rotate; and
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member is connected to the second locking member, and the second locking member is detached from the front wheel bracket; and when the unlocking handle is pulled, the first locking mechanism is switched from the locking state to the unlocking state. When the carrycot, the stroller frame and the base are combined as the automobile safety seat, locking and unlocking of the carrycot and the folded stroller frame are controlled by means of the first locking mechanism. The operation is simple, and the carrycot is convenient to put therein and take out therefrom.

In some embodiments, the automobile safety seat further includes a second locking mechanism also used for locking the carrycot on the stroller frame, the second locking mechanism includes a first locking slider, the first locking slider is slidably arranged at the bottom of the carrycot along a front-rear direction; an engaging and disengaging device is arranged between the first locking slider and the first connecting member or the unlocking handle; and the second locking mechanism and the engaging and disengaging device are the second locking mechanism and the engaging and disengaging device in the automobile safety seat in the first aspect above.

In some embodiments, the stroller frame further includes a carrycot tray, the carrycot tray is connected to the front wheel bracket and/or the rear wheel bracket, the carrycot is arranged on the carrycot tray, and at least part of the carrycot is located above the carrycot tray; and the automobile safety seat further includes a third locking mechanism for locking the stroller frame on the base, the third locking mechanism being the third locking mechanism in the automobile safety seat in the first aspect above.

A fifth aspect of the present disclosure provides an assembling and disassembling method for a carrycot of an automobile safety seat, wherein the automobile safety seat comprises a base, a stroller frame being folded and arranged on the base, a carrycot arranged on the stroller frame, a first locking mechanism for locking the carrycot on the folded stroller frame, a second locking mechanism also for locking the carrycot on the folded stroller frame, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism and the second locking mechanism are independently in the locking state or the unlocking state;
the assembling and disassembling method for a carrycot comprises: switching the third locking mechanism to a locking state, synchronously unlocking the first locking mechanism and the second locking mechanism, and then removing the carrycot from the stroller frame; wherin after the carrycot is removed from the stroller frame, the engaging and disengaging device is in the operating state of disengaging.

In some embodiments, the automobile safety seat is the automobile safety seat in the first aspect above.

A sixth aspect of the present disclosure provides an assembling and disassembling method for a stroller frame and a carrycot of an automobile safety seat is provided, wherein the automobile safety seat comprises a base, a stroller frame being folded and arranged on the base, a carrycot arranged on the stroller frame, a first locking mechanism for locking the carrycot on the folded stroller frame, a second locking mechanism also for locking the carrycot on the folded stroller frame, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism and the second locking mechanism are independently in the locking state or the unlocking state;
the assembling and disassembling method for a stroller frame and a carrycot comprises: switching the third locking mechanism to an unlocking state, and then removing the stroller frame and the carrycot from the base; wherein after the stroller frame and the carrycot are removed from the base, the engaging and disengaging device is in the operating state of disengaging.

In some embodiments, the automobile safety seat is the automobile safety seat in the first aspect above.

A seventh aspect of the present disclosure provides a child stroller, including a stroller frame having an unfolded state and a folded state, and a carrycot arranged on the stroller frame; the stroller frame including a front wheel bracket and a rear wheel bracket; wherein the child stroller further includes a first locking mechanism for locking the carrycot on the folded stroller frame, and a second locking mechanism also used for locking the carrycot on the folded stroller frame, wherein an engaging and disengaging device is arranged between the first locking mechanism and the second locking mechanism, and when the engaging and disengaging device is in an operating state of disengaging, the first locking mechanism and the second locking mechanism are disconnected so that the first locking mechanism and the second locking mechanism are independently in a locking state or an unlocking state. When the carrycot and the stroller frame are used as the child stroller, the carrycot can be completely locked to the stroller frame, such that the safety of the child stroller is improved, thereby reducing the risk of misuse.

In some embodiments, the first locking mechanism includes:
an unlocking handle, arranged on the carrycot;
a first locking member, rotatably connected to a rear portion of the carrycot by a first rotating shaft;
a first elastic member, abutting against the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the stroller frame by a second rotating shaft;
a second elastic member, abutting against the second locking member;
a first driving member, movably arranged on a front portion of the carrycot, and the first driving member being capable of driving the second locking member to move; and
a second connecting member, two ends of the second connecting member being respectively connected to the unlocking handle and the first driving member, the unlocking handle driving the second locking member to rotate by the second connecting member and the first driving member; and
a lower portion of the rear wheel bracket is rotatably connected to a rear wheel by a rear wheel axle, and a front wheel is arranged on a lower portion of the front wheel bracket;
wherein the first locking mechanism has a locking state and an unlocking state, and when the stroller frame is in an operating state of folding and the first locking mechanism is in the locking state, the first locking member hooks the rear wheel axle or the rear wheel bracket, and the second locking member hooks the front wheel bracket; when the first locking mechanism is in the unlocking state, the stroller frame is allowed to be in an operating state of unfolding, the first locking member is detached from the rear wheel axle or the rear wheel bracket, the first driving member abuts against the second locking member, and the second locking member is detached from the front wheel bracket; and when the unlocking handle is pulled, the first locking mechanism is switched from the locking state to the unlocking state.

In some embodiments, the first driving member is rotatably connected to the front portion of the carrycot by a third rotating shaft.

In some embodiments, the second locking mechanism includes:
a first locking slider, slidably arranged at the bottom of the carrycot along a front-rear direction, a front portion of the first locking slider being provided with a fourth locking member, and a rear portion of the first locking slider being provided with a fifth locking member;
a fourth elastic member, connected to the first locking slider;
a first locking rod, fixedly arranged on the front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism switches between the locking state and the unlocking state, the first locking slider slides along the bottom of the carrycot; and the fourth elastic member applies an elastic force to the first locking slider, so that the second locking mechanism tends to be switched to the locking state.

In some embodiments, when the engaging and disengaging device is arranged between the first locking slider and the unlocking handle or the first connecting member and the engaging and disengaging device is in the operating state of engaging, the first locking mechanism and the second locking mechanism are connected so that the first locking mechanism and the second locking mechanism are synchronously in a locking state or an unlocking state.

In some embodiments, the first locking mechanism further includes:
a third locking member, rotatably connected to a middle portion of the carrycot by means of a fourth rotating shaft;
a third elastic member, connected to the third locking member; and
a third connecting member, two ends of the third connecting member being respectively connected to the unlocking handle and the third locking member, the unlocking handle driving, by the third connecting member, the third locking member to rotate; and
when the stroller frame is in the unfolded state and the carrycot is arranged on the unfolded stroller frame, the third locking member locks the carrycot on the stroller frame.

In some embodiments, the engaging and disengaging device includes:
a sixth locking member, slidably arranged in the first locking slider along an up-down direction;
a fourth connecting member, provided with a locking hole, and the fourth connecting member being the first connecting member;
a fifth elastic member, connected to the sixth locking member, and the fifth elastic member applying an elastic force in one direction to the sixth locking member, the elastic force in the direction causing the sixth locking member to tend to be detached from the locking hole; and
a second driving member for driving the sixth locking member to slide in a direction of insertion into the locking hole;
wherein when the second driving member pushes the sixth locking member to slide upward, one part of the sixth locking member is inserted into the locking hole in the fourth connecting member and the other part of the sixth locking member is still located in the first locking slider, and the engaging and disengaging device is in the operating state of engaging; and the sixth locking member slides downward under the elastic force of the fifth elastic member, the sixth locking member is detached from the locking hole in the fourth connecting member, and the engaging and disengaging device is in the operating state of disengaging.

In some embodiments, the stroller frame further includes a carrycot tray, the carrycot tray is connected to the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along an up-down direction, an upper end of the trigger push rod faces a lower end of the sixth locking member; when the trigger push rod moves upward, the trigger push rod also pushes the sixth locking member to move upward and be inserted into the locking hole, and the engaging and disengaging device is in the operating state of engaging; and when the sixth locking member slides downward under the elastic force of the fifth elastic member to, the lower end of the trigger push rod is pushed to downwardly extend out of a lower bottom surface of the carrycot tray, and the engaging and disengaging device is in the operating state of disengaging.

In some embodiments, the trigger push rod is further connected to a sixth elastic member, the sixth elastic member applies an elastic force to the trigger push rod so that the lower end of the trigger push rod tends to protrude towards the bottom of the carrycot tray.

In some embodiments, the stroller frame includes at least two front wheel brackets on left and right sides respectively and at least two rear wheel brackets on the left and right sides respectively, the front wheel bracket further includes a first transverse rod used for connecting the two front wheel brackets on the left and right sides, the first transverse rod being provided with a locking groove, when the first locking mechanism is in the locking state, the second locking member is hooked in the locking groove, and when the first locking mechanism is in the unlocking state, the second locking member is detached from the locking groove.

In some embodiments, the first connecting member and the second connecting member are both flexible plastic straps; and the unlocking handle is slidably arranged on a front lower portion of the carrycot.

### BRIEF DESCRIPTION OF DRAWINGS

FIG. 1 is a side view of a carrycot, a stroller frame and a base according to an embodiment of the present disclosure;
FIG. 2 is a top view of the carrycot, the stroller frame and the base according to an embodiment of the present disclosure, wherein a first locking mechanism, a second locking mechanism and a third locking mechanism are all in a locked state;
FIG. 3 is a schematic cross-sectional view along a direction A-A in FIG. 2;
FIG. 4 is a schematic partial enlarged view of A in FIG. 3;
FIG. 5 is a schematic cross-sectional view along a direction B-B in FIG. 2;
FIG. 6 is a schematic cross-sectional view along a direction C-C in FIG. 2, in which the carrycot has been separated from the stroller frame;
FIG. 7 is a schematic partial enlarged view of B in FIG. 6;
FIG. 8 is a top view of the carrycot, the stroller frame and the base according to an embodiment of the present disclosure, wherein the first locking mechanism, the second locking mechanism and the third locking mechanism are all in an unlocked state;
FIG. 9 is a schematic cross-sectional view along a direction D-D in FIG. 8;
FIG. 10 is a schematic partial enlarged view of C in FIG. 9;
FIG. 11 is a schematic cross-sectional view along a direction E-E in FIG. 8;
FIG. 12 is a schematic partial enlarged view of D in FIG. 9;
FIG. 13 is a three-dimensional view of the stroller frame according to an embodiment of the present disclosure;
FIG. 14 is a diagram of a separation state of the carrycot and the stroller frame when used as an automobile safety seat according to an embodiment of the present disclosure;
FIG. 15 is a side view I of the carrycot and the stroller frame according to an embodiment of the present disclosure;
FIG. 16 is a top view I of the carrycot and the stroller frame according to an embodiment of the present disclosure, wherein the first locking mechanism and the second locking mechanism are in the locked state;
FIG. 17 is a schematic cross-sectional view along a direction F-F in FIG. 16;
FIG. 18 is a schematic partial enlarged view of E in FIG. 17;
FIG. 19 is a schematic cross-sectional view along a direction G-G in FIG. 16;
FIG. 20 is a top view of the carrycot and the stroller frame according to an embodiment of the present disclosure, wherein the first locking mechanism and the second locking mechanism are in the unlocked state;
FIG. 21 is a schematic cross-sectional view along a direction H-H in FIG. 20;
FIG. 22 is a diagram I of a separation state of the carrycot and the stroller frame when used as a child stroller according to an embodiment of the present disclosure;
FIG. 23 is a side view II of the carrycot and the stroller frame according to an embodiment of the present disclosure;
FIG. 24 is a top view II of the carrycot and the stroller frame according to an embodiment of the present disclosure, wherein the first locking mechanism is in the locked state;
FIG. 25 is a schematic cross-sectional view along a direction I-I in FIG. 24;
FIG. 26 is a top view III of the carrycot and the stroller frame according to an embodiment of the present disclosure, wherein the first locking mechanism is in the unlocked state;
FIG. 27 is a schematic cross-sectional view along a direction J-J in FIG. 26;
FIG. 28 is a diagram II of a separation state of the carrycot and the stroller frame when used as the child stroller according to an embodiment of the present disclosure;
FIG. 29 is a side view of the stroller frame according to an embodiment of the present disclosure, in which a safety mechanism is in a closed state;
FIG. 30 is a schematic cross-sectional view along a direction K-K in FIG. 29;
FIG. 31 is a side view II of the carrycot and the stroller frame according to an embodiment of the present disclosure, wherein the safety mechanism is in an open state; and
FIG. 32 is a schematic cross-sectional view along a direction L-L in FIG. 31.

Wherein, 1 - base; 2 - stroller frame; 21 - front wheel bracket; 211 - front wheel axle; 212 - front wheel; 22 - rear wheel bracket; 221 - rear wheel axle/second transverse rod; 222 - rear wheel; 3 - carrycot; 31 - handlebar; 4 - first locking mechanism; 41 - unlocking handle; 42 - first locking member; 421 - first rotating shaft; 422 - first elastic member; 423 - first connecting member; 43 - second locking member; 431 - second rotating shaft; 432 - second elastic member; 433 - second connecting member; 434 - first driving member; 435 - third rotating shaft; 44 - third locking member; 441 - fourth rotating shaft; 442 - third elastic member; 443 - third connecting member; 444 - middle lock rod; 445 - slot; 446 - insert block; 5 - second locking mechanism; 51 - first locking slider; 511 - fourth locking member; 512 - fifth locking member; 52 - fourth elastic member; 53 - first locking rod; 54 - second locking rod; 541 - accommodating groove; 6 - engaging and disengaging device; 61 - sixth locking member; 62 - fourth connecting member; 63 - locking hole; 64 - fifth elastic member; 65 - second driving member; 7 - carrycot tray; 71 - sixth elastic member; 8 - first transverse rod; 81 - locking groove; 9 - third locking mechanism; 91 - second locking slider; 92 - seventh locking member; 921 - guide slope; 93 - third driving member; 94 - seventh elastic member; 95 - third locking rod; 96 - eighth locking member; 961 - fifth rotating shaft; 97 - eighth elastic member; 98 - fifth connecting member/fourth driving member; 99 - safety mechanism; 991 - stop rod; 9911 - protruding portion; 992 - stop rod elastic member; 10 - stroller frame; 101 - front wheel bracket; 1011 - front wheel axle; 1012 - front wheel; 102 - rear wheel bracket; 1021 - rear wheel axle; 1022 - rear wheel.

### DETAILED DESCRIPTION OF EMBODIMENTS

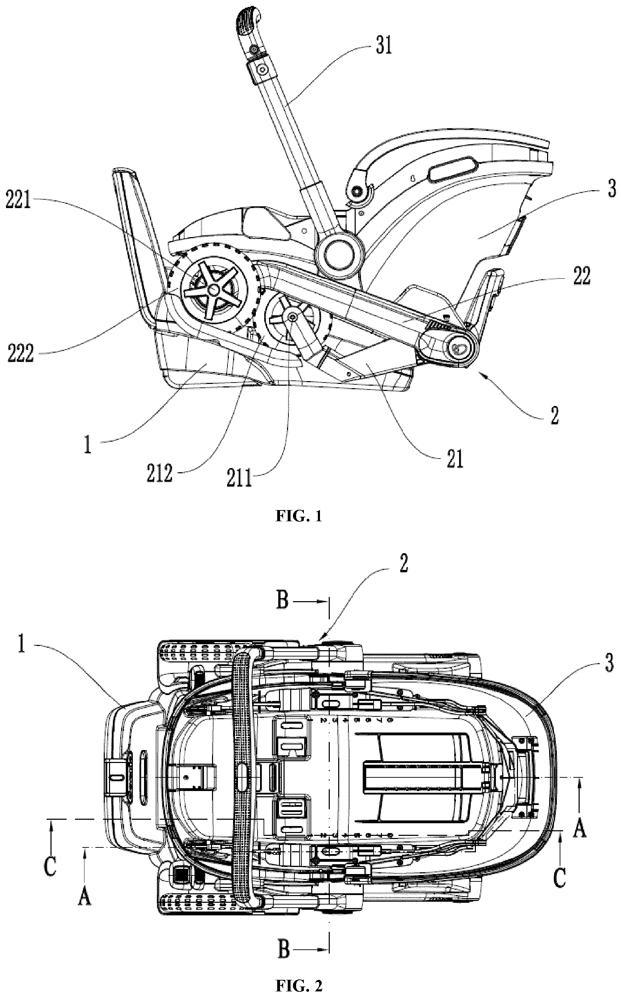

In the description of the present disclosure, the directions as referred to, such as "front", "back", "left", "right", "up" and "down", are all defined with reference to directions observed when children sit. As shown in FIG. 1, the right direction in the figure is "front", the left direction in the figure is "back", the upper direction in the figure is "up", the lower direction in the figure is "down", and the directions perpendicular to the viewing angle in the figure are "left" and "right". The above definitions of directions are merely to facilitate the description of the present disclosure and simplify the description, but do not indicate or imply that the apparatus or element referred to must have a specific orientation, be constructed and operated in the specific orientation, and therefore cannot be construed as a limitation on the present disclosure.

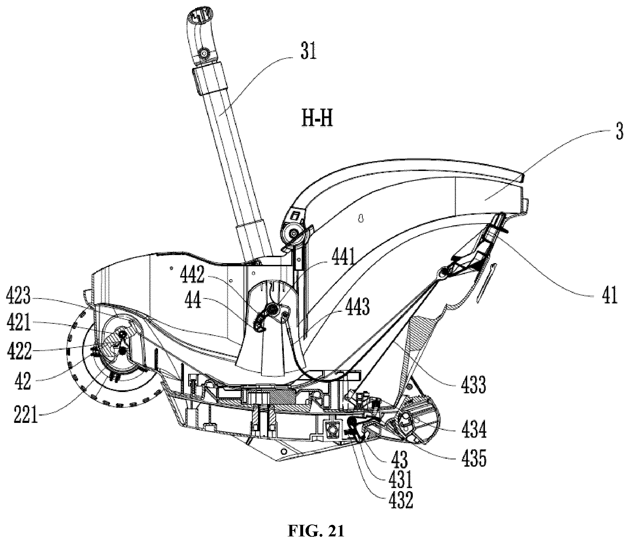

As shown in FIG. 1 to FIG. 21, an automobile safety seat in the present disclosure includes a base 1, a stroller frame 2 arranged on the base 1 after being folded, and a carrycot 3 arranged on the stroller frame 2. The stroller frame 2 includes a front wheel bracket 21 and a rear wheel bracket 22. A lower portion of the front wheel bracket 21 is rotatably connected to a front wheel 212 by means of a front wheel axle 211. A lower portion of the rear wheel bracket 22 is rotatably connected to a rear wheel 222 by means of a rear wheel axle 221. Further, the stroller frame 2 includes the front wheel bracket 21 and the rear wheel bracket 22. The rear wheel bracket 22 includes a left rear wheel bracket, a right rear wheel bracket, and a second transverse rod 221 (i.e., the rear wheel axle 221) used for connecting the left rear wheel bracket and the right rear wheel bracket. The front wheel bracket 21 includes a left front wheel bracket, a right front wheel bracket, and a first transverse rod 8 used for connecting the left front wheel bracket and the right front wheel bracket. The lower portion of the front wheel bracket 21 is rotatably connected to the front wheel 212 by means of the front wheel axle 211. The lower portion of the rear wheel bracket 22 is rotatably connected to the rear wheel 222 by means of the rear wheel axle 221.

The following is a detailed description to a specific structure of the automobile safety seat and a connection relationship between components.

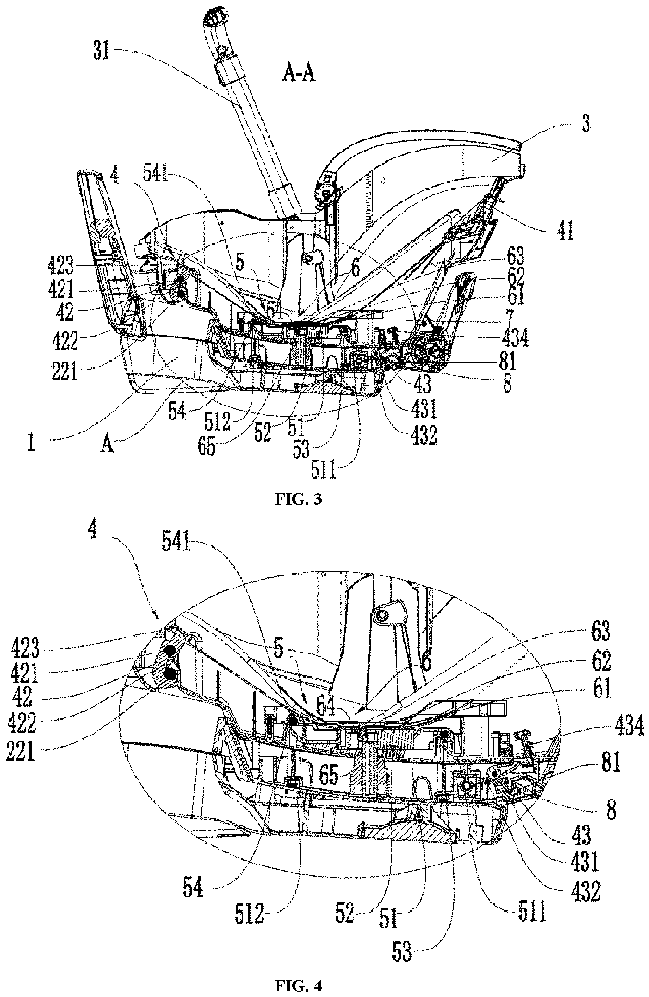

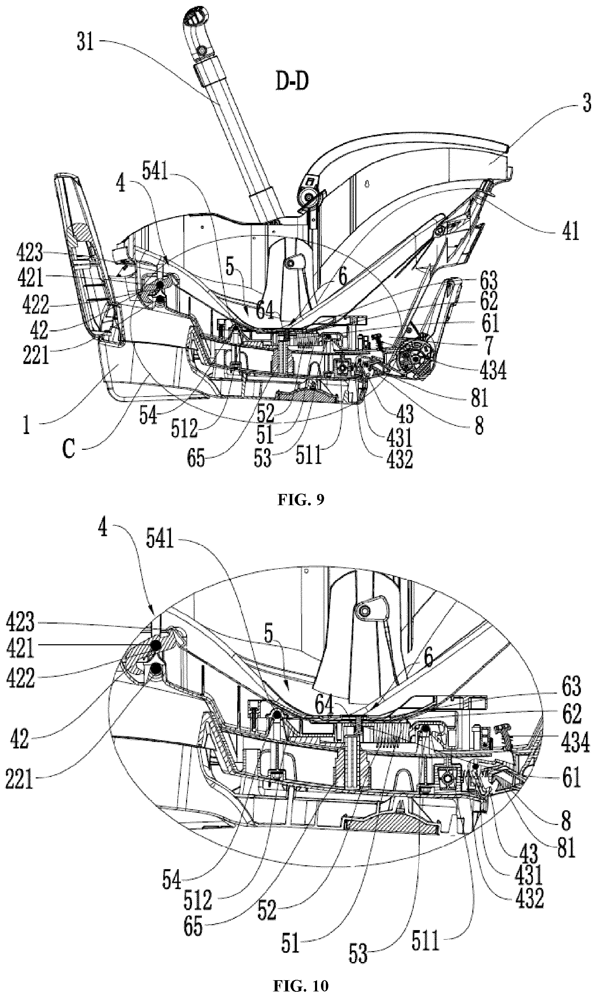

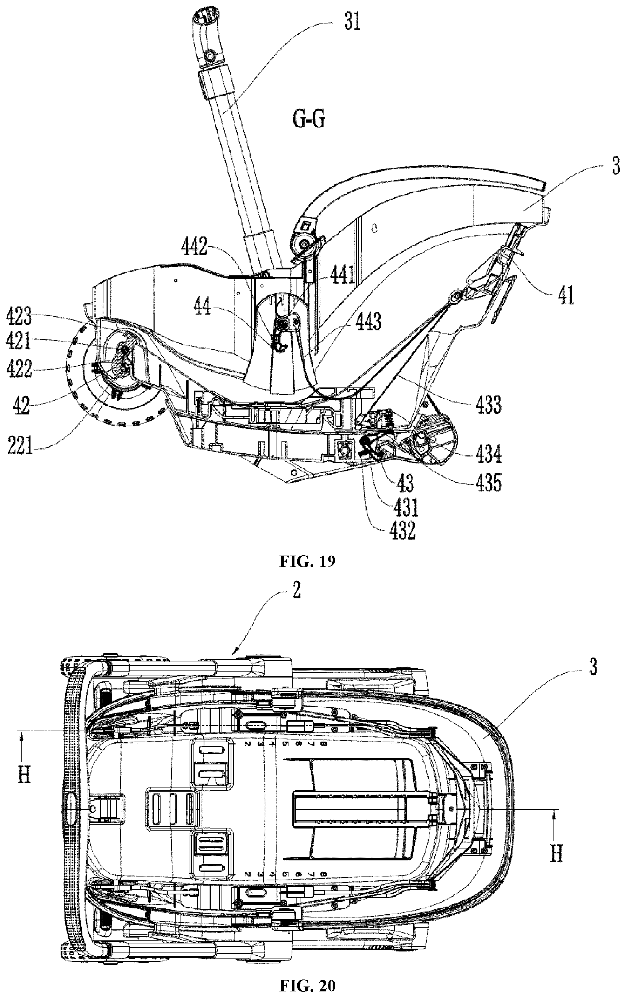

The automobile safety seat in this embodiment includes a first locking mechanism 4 used for locking the carrycot 3 on the folded stroller frame 2. As shown in FIG. 3, FIG. 4, FIG. 9, FIG. 10 and FIG. 19, the first locking mechanism 4 includes an unlocking handle 41, a first locking member 42, a first elastic member 422, a first connecting member 423, a second locking member 43, a second elastic member 432, a second connecting member 433, a first driving member 434, a third locking member 44, a third elastic member 442, and a third connecting member 443. The unlocking handle 41 is slidably arranged on a front lower portion of the carrycot 3. The first locking member 42 is rotatably connected to a rear portion of the carrycot 3 by means of a first rotating shaft 421. The first elastic member 422 abuts against the first locking member 42. Two ends of the first connecting member 423 are respectively connected to the unlocking handle 41 and the first locking member 42. The unlocking handle 41 drives, by means of the first connecting member 423, the first locking member 42 to rotate. The second locking member 43 is rotatably connected to a front portion of the stroller frame 2 by means of a second rotating shaft 431. Specifically, the second locking member 43 is rotatably connected to a front portion of a carrycot tray 7 by means of the second rotating shaft 431, and the second elastic member 432 abuts against the second locking member 43. As shown in FIG. 19, the second connecting member 433 has one end connected to the unlocking handle 41 and the other end connected to one end of the first driving member 434, the first driving member 434 is rotatably connected to the front portion of the carrycot 3 by means of a third rotating shaft 435, the unlocking handle 41 drives, by means of the second connecting member 433, the first driving member 434 to rotate, and the other end of the first driving member 434 pushes an upper end of the second locking member 43 so that the second locking member 43 rotates. In other embodiments, the second locking member 43 may alternatively be directly arranged on the front portion of the carrycot 3, and the second connecting member 433 is directly connected to the second locking member 43. The arrangement solution in this embodiment can better match a design requirement. The third locking member 44 is rotatably connected to a middle portion of the carrycot 3 by means of a fourth rotating shaft 441. The third elastic member 442 abuts against the third locking member 44. Two ends of the third connecting member 443 are respectively connected to the unlocking handle 41 and the third locking member 44. The unlocking handle 41 drives, by means of the third connecting member 443, the third locking member 44 to rotate. Further, the first connecting member 423, the second connecting member 433 and the third connecting member 443 are all flexible plastic straps. The first locking mechanism 4 has a locking state and an unlocking state. When the first locking mechanism 4 is in the locking state, as shown in FIG. 3 and FIG. 4, the first locking member 42 hooks the second transverse rod/the rear wheel axle 221 or the rear wheel bracket 22, and the second locking member 43 hooks the front wheel bracket 21. When the first locking mechanism 4 is in the unlocking state, as shown in FIG. 9 and FIG. 10, the first locking member 42 is detached from the second transverse rod/the rear wheel axle 221 or the rear wheel bracket 22, and the second locking member 43 is detached from the front wheel bracket 21. The first elastic member 422 applies an elastic force to the first locking member 42, so that the first locking member 42 rotates around the first rotating shaft 421 in a direction where the second transverse rod/the rear wheel axle 221 or the rear wheel bracket 22 tends to be hooked. The second elastic member 432 applies an elastic force to the second locking member 43, so that the second locking member 43 rotates around the second rotating shaft 431 in a direction where the front wheel bracket 21 tends to be hooked. When the unlocking handle 41 is pulled, the first locking mechanism 4 is switched from the locking state to the unlocking state.

The automobile safety seat further includes a second locking mechanism 5 used for secondary locking of the carrycot 3 on the stroller frame 2. The second locking mechanism 5 includes a first locking slider 51, a fourth elastic member 52, a first locking rod 53, and a second locking rod 54, as shown in FIG. 3, FIG. 4, FIG. 9 and FIG. 10. The first locking slider 51 is slidably arranged at the bottom of the carrycot 3 along a front-rear direction, a front portion of the first locking slider 51 is provided with a fourth locking member 511, and a rear portion of the first locking slider 51 is provided with a fifth locking member 512. The fourth elastic member 52 abuts against the first locking slider 51. The first locking rod 53 is fixedly arranged on the front portion of the stroller frame 2 and extends along a left-right direction. The second locking rod 54 is fixedly arranged on a rear portion of the stroller frame 2 and extends along the left-right direction. Further, the bottom of the carrycot 3 is provided with an accommodating groove 541 fitting the second locking rod 54. After the carrycot 3 is placed on the stroller frame 2, the second locking rod 54 is located in the accommodating groove 541, as shown in FIG. 3 and FIG. 4. There is a gap between the bottom of the carrycot 3 and the first locking rod 53 to allow the fourth locking member 511 to pass.

The second locking mechanism 5 has a locking state and an unlocking state. When the second locking mechanism 5 is in the locking state, as shown in FIG. 3 to FIG. 4, the fourth locking member 511 hooks the first locking rod 53, and the fifth locking member 512 closes the accommodating groove 541 at the bottom of the carrycot 3 and locks the second locking rod 54 in the accommodating groove 541 at the bottom of the carrycot 3. When the second locking mechanism 5 is in the unlocking state, as shown in FIG. 9 to FIG. 10, the fourth locking member 511 is detached from the first locking rod 53, and the fifth locking member 512 is detached from the second locking rod 54. When the second locking mechanism 5 switches between the locking state and the unlocking state, the first locking slider 51 slides along the bottom of the carrycot, and the fourth elastic member 52 applies an elastic force to the first locking slider 51, so that the second locking mechanism 5 tends to enter the locking state.

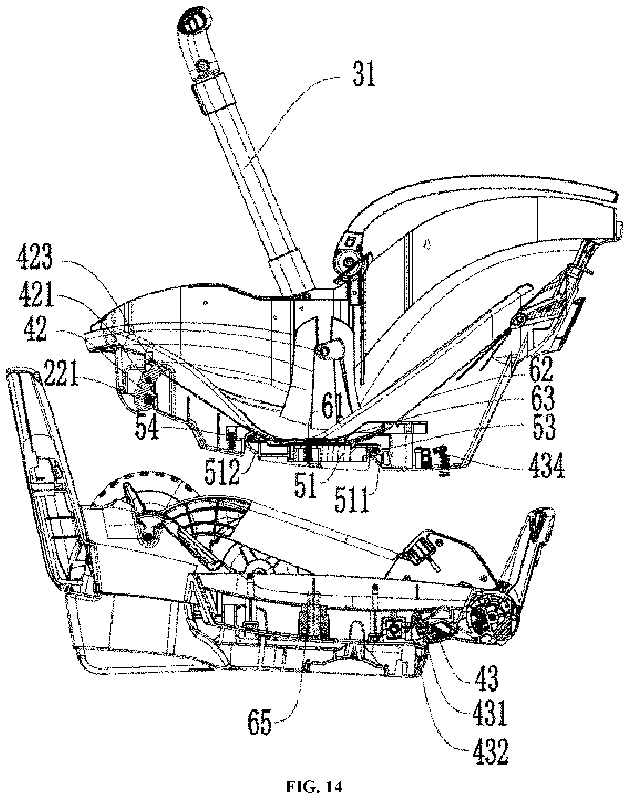

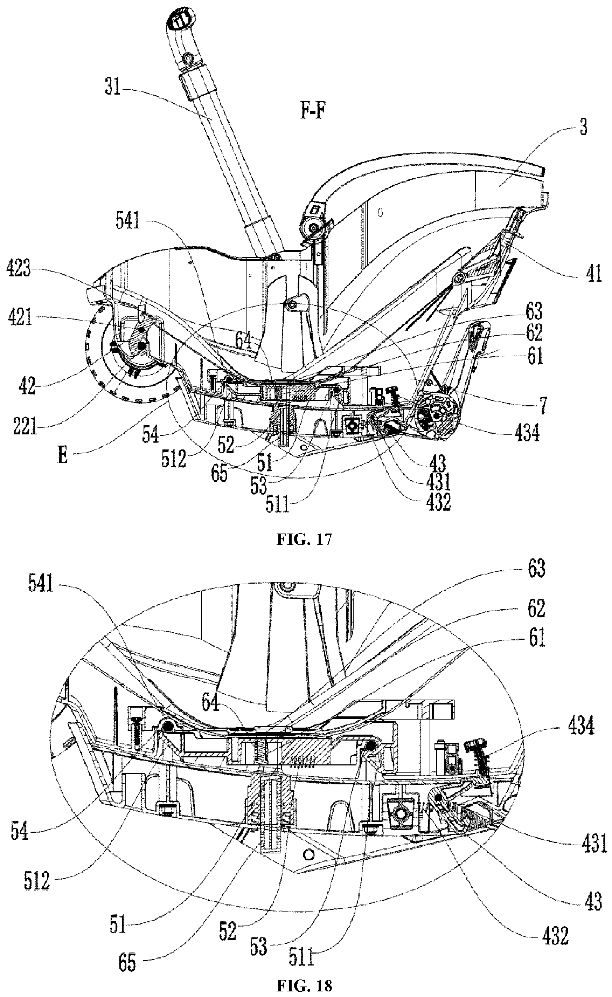

An engaging and disengaging device 6 is further arranged between the first locking slider 51 and the first connecting member 423 or the unlocking handle 41. When the folded stroller frame 2 is placed on the base 1 and the carrycot 3 is placed on the stroller frame 2, the engaging and disengaging device 6 is in an operating state of engaging. As shown in FIG. 3, FIG. 4, FIG. 9 and FIG. 10, the first locking slider 51 is connected to the first connecting member 423 or the unlocking handle 41, and the unlocking handle 41 is capable of driving the first locking slider 51 to slide, so that the first locking mechanism 4 and the second locking mechanism 5 synchronously switch from the locking state to the unlocking state or the first locking mechanism 4 and the second locking mechanism 5 synchronously switch from the unlocking state to the locking state. When the first locking mechanism 4 and the second locking mechanism 5 are both in the unlocking state, the carrycot 3 is allowed to be detached from the stroller frame. In this case, the carrycot 3 can be carried alone. After the carrycot 3 is detached from the stroller frame, the engaging and disengaging device 6 is in an operating state of disengaging, as shown in FIG. 14. After the stroller frame 2 drives the carrycot 3 to be detached from the base 1, the engaging and disengaging device 6 is in the operating state of disengaging, the first locking slider 51 is disconnected from the first connecting member 423 or the unlocking handle 41, that is, the first locking slider 51 is disconnected from the unlocking handle 41, and the unlocking handle 41 is incapable of driving the first locking slider 51 to slide, so that the first locking mechanism 4 and the second locking mechanism 5 are independently in the locking state or the unlocking state. When the second locking mechanism 5 is in the locking state, the carrycot 3 cannot be detached from the stroller frame, as shown in FIG. 17 and FIG. 18.

Specifically, the engaging and disengaging device 6 includes a sixth locking member 61, a fourth connecting member 62, a fifth elastic member 64, and a second driving member 65. The sixth locking member 61 is slidably arranged in the first locking slider 51 along an up-down direction. The fourth connecting member 62 is provided with a locking hole 63. The fifth elastic member 64 abuts against the sixth locking member 61, and the fifth elastic member 64 applies an elastic force in one direction to the sixth locking member 61. The elastic force in the direction causes the sixth locking member 61 to tend to be detached from the locking hole 63. The second driving member 65 is used for driving the sixth locking member 61 to slide in a direction of insertion into the locking hole 63. In this embodiment, the fourth connecting member 62 is the first connecting member 423, and the first locking slider 51 and the first connecting member 423 are connected by means of the sixth locking member 61. This design is more concise. In other embodiments, the fourth connecting member 62 and the first connecting member 423 may alternatively be arranged separately.

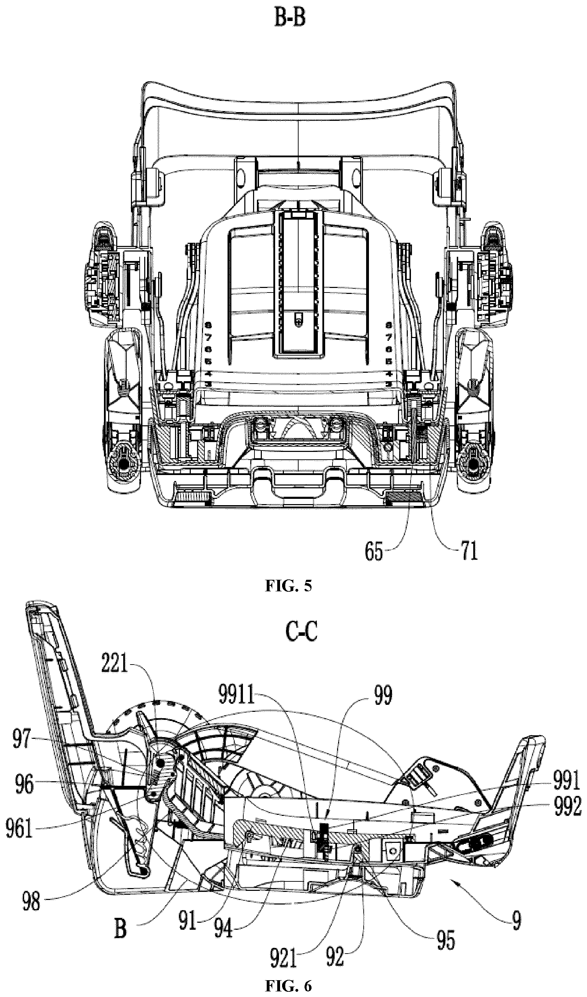

The stroller frame 2 further includes the carrycot tray 7, as shown in FIG. 17 and FIG. 18. The carrycot tray 7 is connected to the front wheel bracket 21 or the rear wheel bracket 22. In some other embodiments, the carrycot tray 7 is connected to both the front wheel bracket 21 and the rear wheel bracket 22. The carrycot 3 is arranged on the carrycot tray 7, and at least part of the carrycot 3 is located above the carrycot tray 7. The second driving member 65 is a trigger push rod, the trigger push rod is slidably arranged on the carrycot tray 7 along the up-down direction, and an upper end of the trigger push rod faces a lower end of the sixth locking member 61. The trigger push rod further abuts against a sixth elastic member 71, as shown in FIG. 5. The sixth elastic member 71 applies an elastic force to the trigger push rod so that the lower end of the trigger push rod tends to protrude towards the bottom of the carrycot tray 7.

When the folded stroller frame 2 is placed on the base 1 together with the carrycot 3, the second driving member 65 pushes the sixth locking member 61 to slide upward along the first locking slider 51, so that one part of the sixth locking member 61 is inserted into the locking hole 63 in the fourth connecting member 62 and the other part of the sixth locking member 61 is still located in the first locking slider 51. Specifically, the lower end of the trigger push rod (i.e., the second driving member 65) contacts an upper surface of the base 1 to cause the trigger push rod to move upward, and the trigger push rod also pushes the sixth locking member 61 to move upward and be inserted into the locking hole 63. In this case, the engaging and disengaging device 6 is in the operating state of engaging.

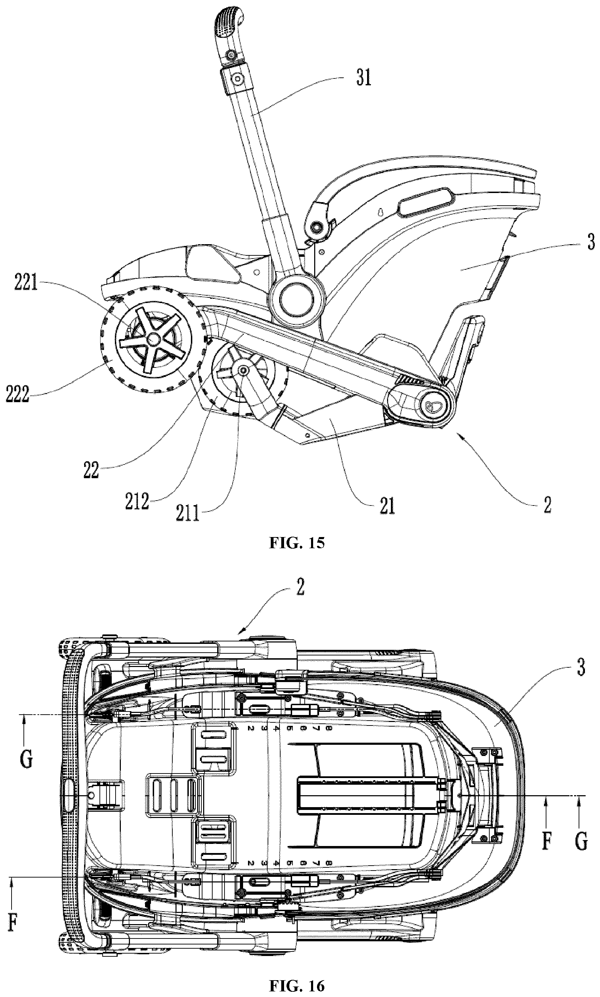

After the stroller frame 2 is detached from the base 1 together with the carrycot 3, as shown in FIG. 15 to FIG. 21, the sixth locking member 61 slides downward along the first locking slider 51 under the elastic force of the fifth elastic member 64 (i.e., the lower end of the trigger push rod is pushed to downwardly extrude out of a lower bottom surface of the carrycot tray 7), and the sixth locking member 61 is detached from the locking hole 63 in the fourth connecting member 62. In this case, the engaging and disengaging device 6 is in the operating state of disengaging.

As shown in FIG. 1, the stroller frame 2 further includes front wheel brackets 21 on left and right sides respectively and rear wheel brackets 22 on the left and right sides respectively. The front wheel bracket 21 further includes a first transverse rod 8 used for connecting the two front wheel brackets on the left and right sides, as shown in FIG. 3, FIG. 4, FIG. 9 and FIG. 10. The first transverse rod 8 is provided with a locking groove 81. When the first locking mechanism 4 is in the locking state, the second locking member 43 is hooked in the locking groove 81. When the first locking mechanism 4 is in the unlocking state, the second locking member 43 is detached from the locking groove 81.

The automobile safety seat further includes a third locking mechanism 9 used for locking the stroller frame 2 on the base 1. The third locking mechanism 9 includes a second locking slider 91, a seventh locking member 92, a third driving member 93, a seventh elastic member 94, a third locking rod 95, an eighth locking member 96, an eighth elastic member 97, and a fifth connecting member/fourth driving member 98, as shown in FIG. 6, FIG. 7, FIG. 11 and FIG. 12. The second locking slider 91 is slidably arranged at the bottom of the carrycot tray 7 along the front-rear direction. A front portion of the second locking slider 91 is provided with a seventh locking member 92. In this embodiment, the second locking slider 91 is arranged integrally with the seventh locking member 92. A front lower portion of the seventh locking member 92 has a guide slope 921, the guide slope 921 is parallel to the third locking rod 95 and the guide slope 921 tilts forward gradually from top to bottom, and the seventh locking member 92 is located on a front lower side of the third locking rod 95. The third driving member 93 is used for driving the second locking slider 91 to slide in the carrycot tray 7 along the front-rear direction. The seventh elastic member 94 abuts against the second locking slider 91. The third locking rod 95 extends along the left-right direction and is fixedly arranged on a front portion of the base 1. The eighth locking member 96 is rotatably connected to a rear portion of the base 1 by means of a fifth rotating shaft 961. The eighth elastic member 97 abuts against the eighth locking member 96. A front portion of the fifth connecting member 98 is connected to the second locking slider 91, and a rear portion of the fifth connecting member 98 is connected to the eighth locking member 96. The fourth driving member 98 is connected to or in contact with the eighth locking member 96. The fourth driving member 98 is used for driving the eighth locking member 96 to rotate. The fourth driving member is the fifth connecting member.

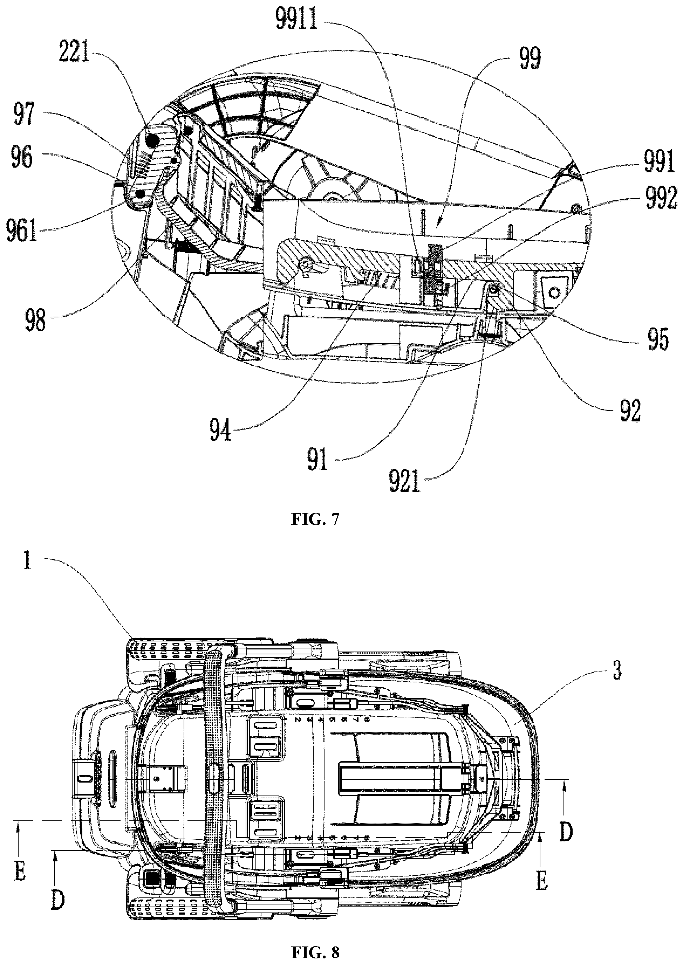

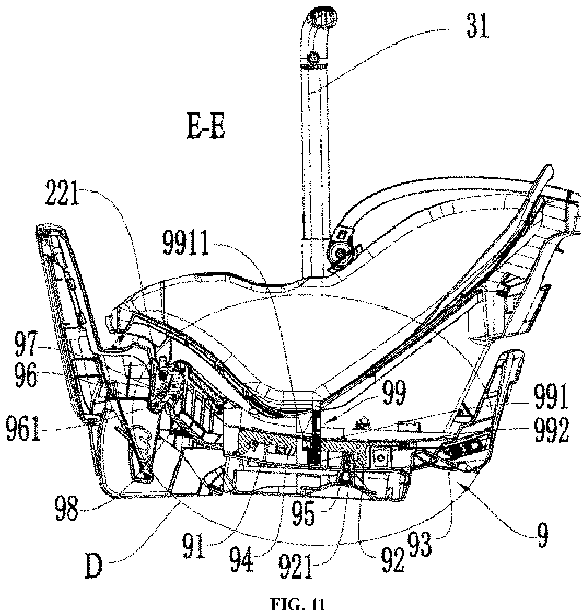

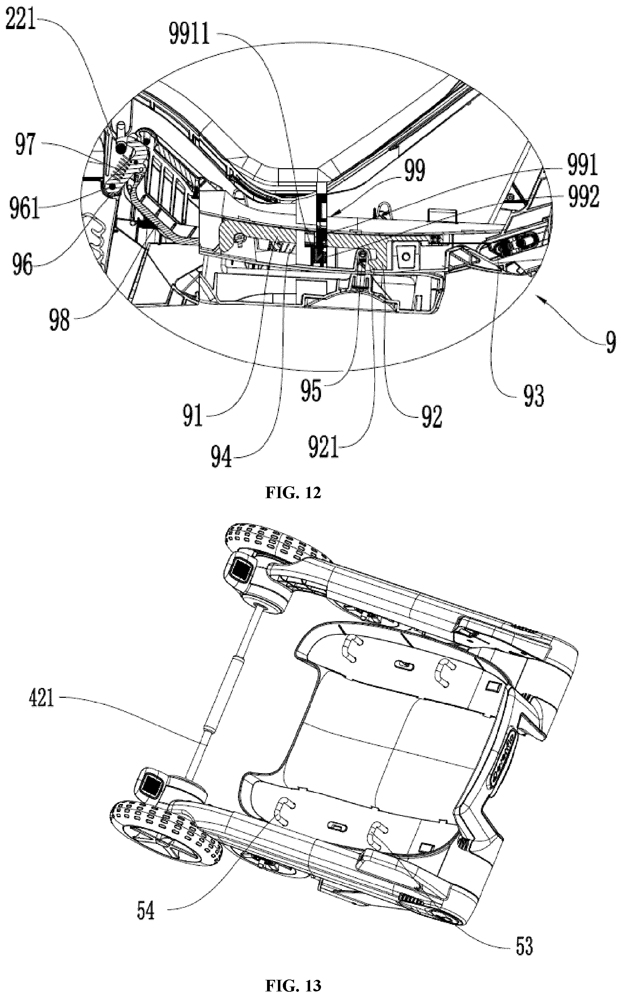

The third locking mechanism 9 has a locking state and an unlocking state. When the third locking mechanism 9 is in the locking state, as shown in FIG. 6 and FIG. 7, the seventh locking member 92 hooks the third locking rod 95, and the eighth locking member 96 hooks the rear wheel axle 221 or the rear wheel bracket 22. When the third locking mechanism is in the unlocking state, as shown in FIG. 11 and FIG. 12, the seventh locking member 92 is detached from the third locking rod 95, and the eighth locking member 96 is detached from the rear wheel axle 221 or the rear wheel bracket 22. The eighth elastic member 97 applies an elastic force that tends to hook the rear wheel axle 221 or the rear wheel bracket 22 to the eighth locking member 96. The seventh elastic member 94 applies an elastic force that tends to cause the seventh locking member 92 to hook the third locking rod 95 to the second locking slider 91. It is to be noted that, in this embodiment, the first locking rod 53, the second locking rod 54 and the third locking rod 95 are all arranged transversely along the left-right direction.

The second locking slider 91 is further provided with a safety mechanism 99, as shown in FIG. 6, FIG. 7, FIG. 11, FIG. 12 and FIG. 29 to FIG. 32. When the safety mechanism 99 is in an open state, the second locking slider 91 is allowed to slide so that the third locking mechanism 9 enters the unlocking state from the locking state. When the safety mechanism 99 is in a closed state, the second locking slider 91 is prohibited from sliding so that the third locking mechanism 9 is in the locking state.

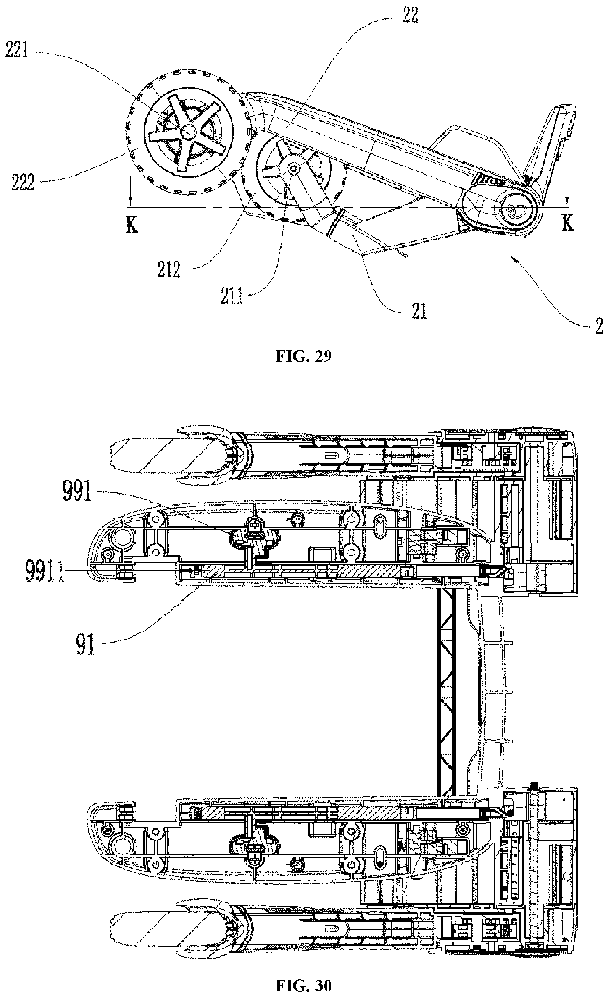

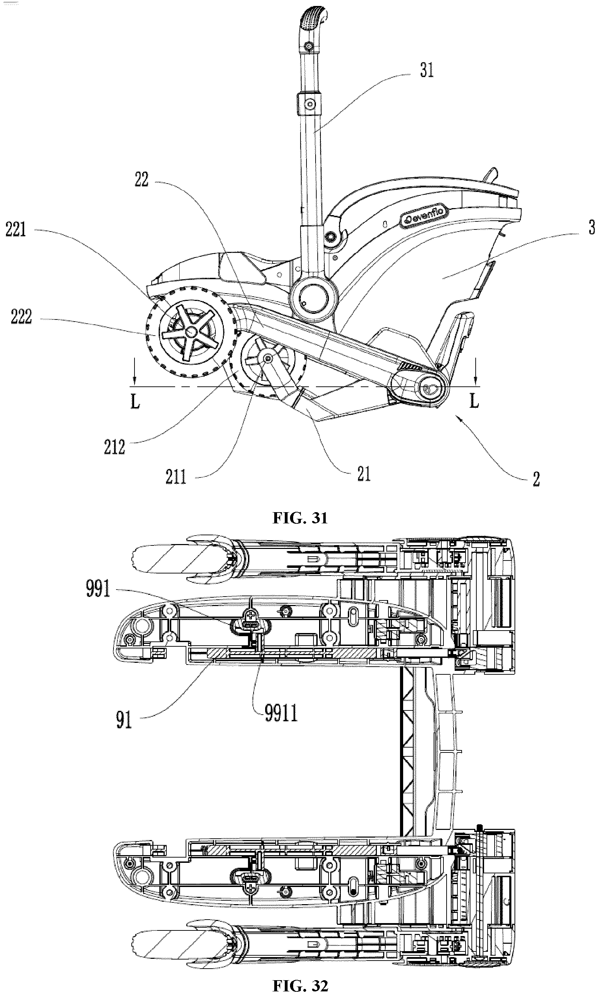

Specifically, the safety mechanism 99 includes a stop rod 991 and a stop rod elastic member 992. The stop rod 991 is slidably inserted into the carrycot tray 7 along the up-down direction. The stop rod elastic member 992 abuts against the stop rod 991, and the stop rod elastic member 992 applies an elastic force to the stop rod 991 so that the stop rod 991 tends to slide upward. When the safety mechanism 99 is in the closed state, an upper end of the stop rod 991 upwardly extends out of an upper surface of the carrycot tray 7, and a side portion of the stop rod 991 blocks the sliding of the second locking slider 91, as shown in FIG. 7 and FIG. 30. When the safety mechanism 99 is in the open state, the upper end of the stop rod 991 is retracted into the upper surface of the carrycot tray 7, as shown in FIG. 12 and FIG. 32. Specifically, in this embodiment, the side portion of the stop rod 991 is provided with a protruding portion 9911. When the safety mechanism 99 is in the closed state, the protruding portion 9911 moves upward and blocks the front of sliding of the second locking slider 91. When the safety mechanism 99 is in the open state, the protruding portion 9911 moves downward, is located below the second locking slider 91, and a blocking effect on the second locking slider 91 is lost, and the second locking slider 91 is movable.

The carrycot 3 has two operating states of detaching from the carrycot tray 7 and mounting on the carrycot tray 7. After the carrycot 3 is detached from the carrycot tray 7, the safety mechanism 99 is in the closed state, and the upper end of the stop rod 991 upwardly extends out of the upper surface of the carrycot tray 7, as shown in FIG. 6 and FIG. 7. After the carrycot 3 is mounted on the carrycot tray 7, a bottom surface of the carrycot 3 presses down the upper end of the stop rod 991 to slide the stop rod downward, and the safety mechanism 99 is in the open state, as shown in FIG. 11 and FIG. 12.

This embodiment further provides an assembling and disassembling method for a carrycot of an automobile safety seat. As described above, the automobile safety seat includes a first locking mechanism 4 used for locking the carrycot 3 on the folded stroller frame 2, a second locking mechanism 5 also used for locking the carrycot 3 on the folded stroller frame 2, and a third locking mechanism 9 used for locking the stroller frame 2 on the base 1. An engaging and disengaging device 6 is arranged between the first locking mechanism 4 and the second locking mechanism 5. When the engaging and disengaging device 6 is in an operating state of engaging, the first locking mechanism 4 and the second locking mechanism 5 are connected so that the first locking mechanism 4 and the second locking mechanism 5 are synchronously in a locking state or an unlocking state. When the engaging and disengaging device 6 is in an operating state of disengaging, the first locking mechanism 4 and the second locking mechanism 5 are disconnected so that the first locking mechanism 4 and the second locking mechanism 5 are independently in the locking state or the unlocking state. Specifically, in the assembling and disassembling method for a carrycot, the third locking mechanism 9 is in a locking state, the first locking mechanism 4 and the second locking mechanism 5 are synchronously unlocked, and then the carrycot 3 is removed from the stroller frame 2. After the carrycot 3 is removed from the stroller frame 2, the engaging and disengaging device 6 is in the operating state of disengaging. A specific structure of the automobile safety seat is as described above, which is not described in detail herein again.

This embodiment further provides an assembling and disassembling method for a stroller frame and a carrycot of an automobile safety seat. As shown above, the automobile safety seat includes a first locking mechanism 4 used for locking the carrycot 3 on the folded stroller frame 2, a second locking mechanism 5 also used for locking the carrycot 3 on the folded stroller frame 2, and a third locking mechanism 9 used for locking the stroller frame 2 on the base 1. An engaging and disengaging device 6 is arranged between the first locking mechanism 4 and the second locking mechanism 5. When the engaging and disengaging device 6 is in an operating state of engaging, the first locking mechanism 4 and the second locking mechanism 5 are connected so that the first locking mechanism 4 and the second locking mechanism 5 are synchronously in a locking state or an unlocking state. When the engaging and disengaging device 6 is in an operating state of disengaging, the first locking mechanism 4 and the second locking mechanism 5 are disconnected so that the first locking mechanism 4 and the second locking mechanism 5 are independently in the locking state or the unlocking state. Specifically, in the assembling and disassembling method for a stroller frame and a carrycot, the third locking mechanism 9 is in an unlocking state, and then the stroller frame 2 and the carrycot 3 are removed from the base 1. After the stroller frame 2 and the carrycot 3 are removed from the base 1, the engaging and disengaging device 6 is in the operating state of disengaging.

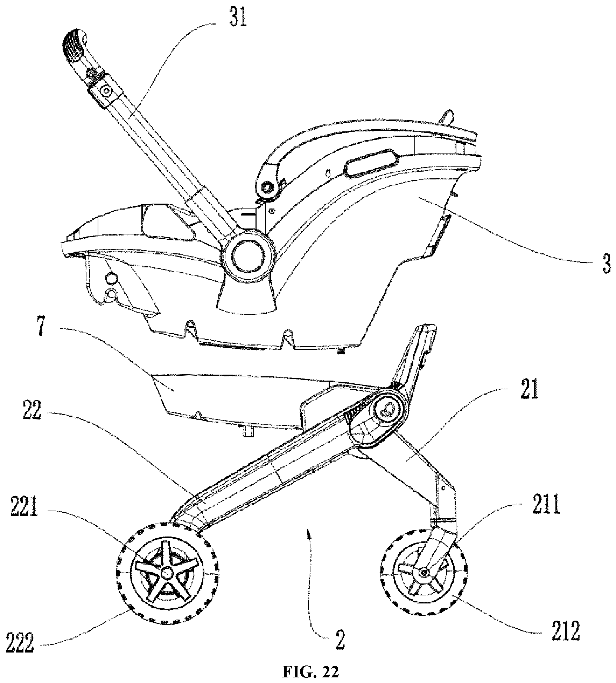

This embodiment further includes a child stroller. As shown in FIG. 22, the child stroller is the stroller in the automobile safety seat above. After the stroller frame 2 and the carrycot 3 are disassembled, the stroller frame is in an unfolded state, the engaging and disengaging device 6 is arranged between the first locking mechanism 4 and the second locking mechanism 5, and the engaging and disengaging device 6 is in the operating state of disengaging. In the operating state, the first locking mechanism 4 and the second locking mechanism 5 are disconnected so that the first locking mechanism 4 and the second locking mechanism 5 are independently in the locking state or the unlocking state. By unlocking the first locking mechanism 4 and the second locking mechanism 5, the carrycot 3 is allowed to be detached from the stroller frame. In this case, the carrycot 3 can be carried alone. Alternatively, the engaging and disengaging device 6 further has an operating state of engaging. When the engaging and disengaging device 6 is in the operating state of engaging, the first locking mechanism 4 and the second locking mechanism 5 are connected so that the first locking mechanism 4 and the second locking mechanism 5 are synchronously in the locking state or the unlocking state. When the child stroller is in use (in a state of being pushed), the first locking mechanism 4 is in an unlocked state, and the second locking mechanism 5 is in a locked state. The second locking mechanism 5 enables the carrycot to be completely locked to the stroller frame, such that the safety of the child stroller is improved, thereby reducing the risk of misuse.

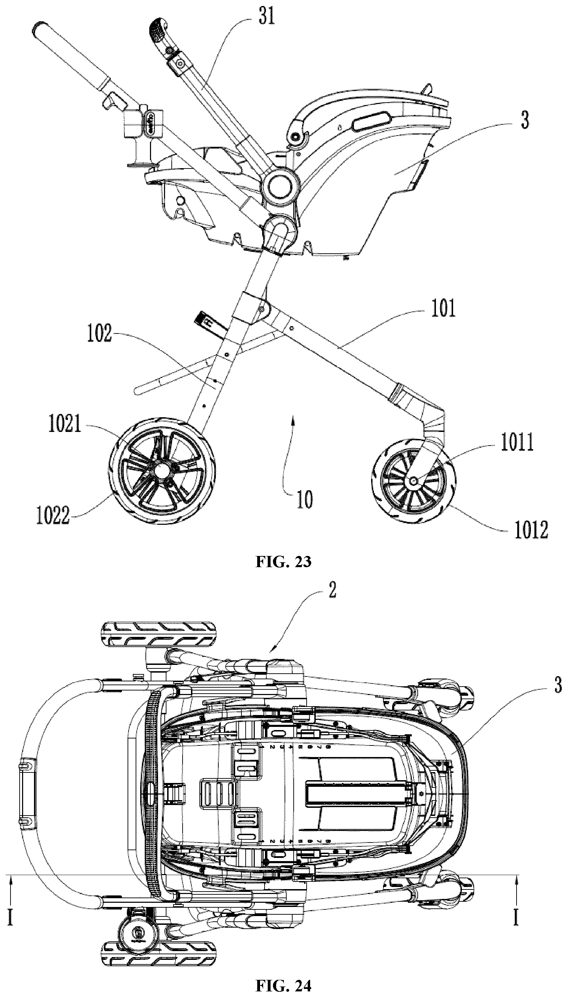

This embodiment further includes another child stroller, as shown in FIG. 23 to FIG. 28. The child stroller includes a stroller frame 10 having an unfolded state, and a carrycot 3 arranged on the stroller frame 10. The stroller frame 10 includes a front wheel bracket 101 and a rear wheel bracket 102. A lower portion of the rear wheel bracket 102 is rotatably connected to a rear wheel 1022 by means of a rear wheel axle 1021. A lower portion of the front wheel bracket 101 is rotatably connected to a front wheel 1012 by means of a front wheel axle 1011.

The another child stroller above further includes a first locking mechanism 4 used for locking the carrycot 3 on the stroller frame 10. The first locking mechanism 4 includes an unlocking handle 41, a first locking member 42, a first elastic member 422, a first connecting member 423, a second locking member 43, a second elastic member 432, a second connecting member 433, a third locking member 44, a third elastic member 442, a third connecting member 443 and a middle lock rod 444. The unlocking handle 41 is slidably arranged on a front lower portion of the carrycot 3. The first locking member 42 is rotatably connected to a rear portion of the carrycot 3 by means of a first rotating shaft 421. The first elastic member 422 abuts against the first locking member 42. Two ends of the first connecting member 423 are respectively connected to the unlocking handle 41 and the first locking member 42. The unlocking handle 41 drives, by means of the first connecting member 423, the first locking member 42 to rotate. The second locking member 43 is rotatably connected to a front portion of the carrycot 3 by means of a second rotating shaft 431. The second elastic member 432 abuts against the second locking member 43. Two ends of the second connecting member 433 are respectively connected to the unlocking handle 41 and the second locking member 43. The unlocking handle 41 drives, by means of the second connecting member 433, the second locking member 43 to rotate. The third locking member 44 is rotatably connected to a middle portion of the carrycot 3 by means of a fourth rotating shaft 441. The third elastic member 442 abuts against the third locking member 44. The third locking member 44 pulls two ends of the connecting member 443 to be connected to the unlocking handle 41 and the third locking member 44 respectively. The unlocking handle 41 pulls, by means of the third locking member 44, the third connecting member 443 to drive the third locking member 44 to rotate. The middle lock rod 444 is fixedly arranged in a middle portion of the stroller frame 10. The first connecting member 423, the second connecting member 433 and the third connecting member 443 are all flexible plastic straps.

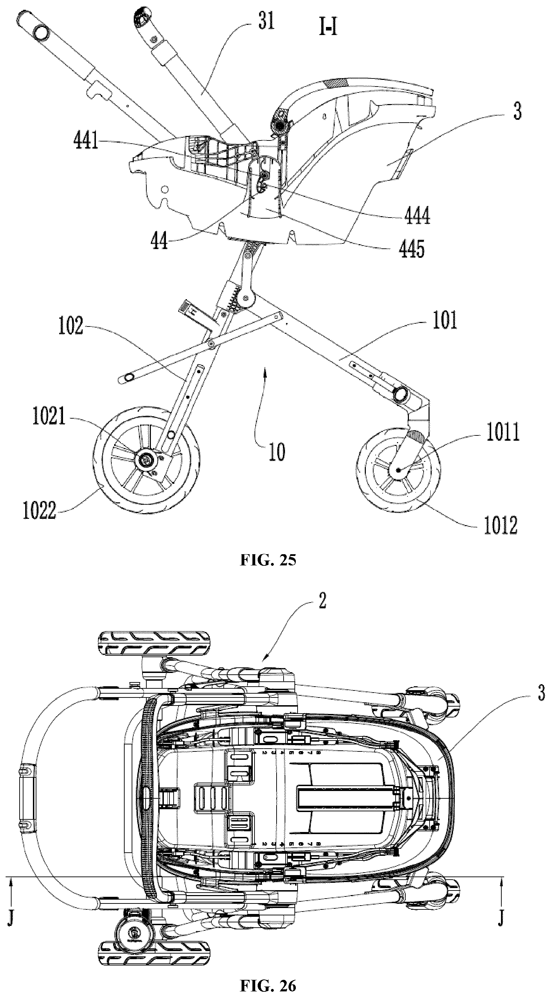

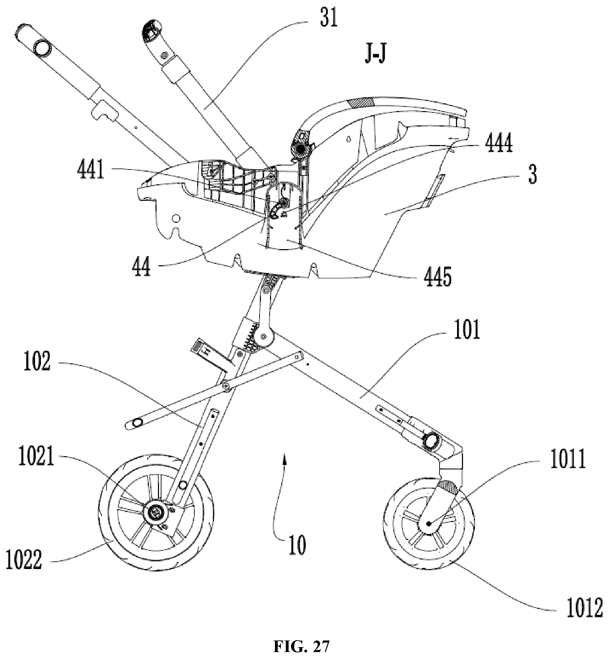

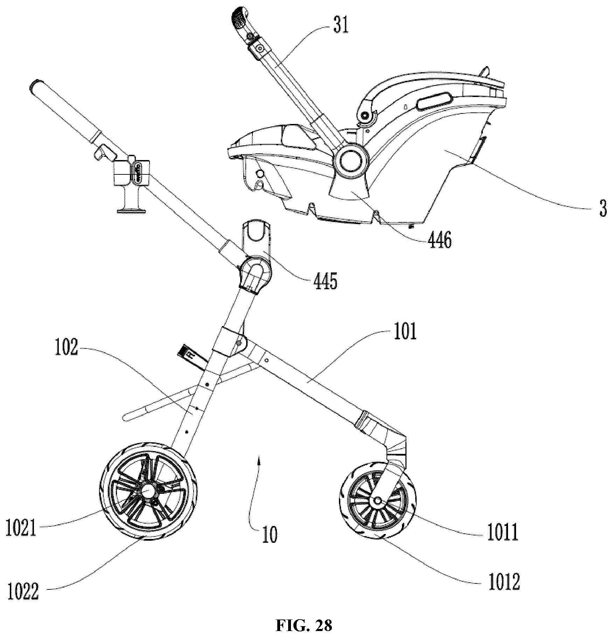

The first locking mechanism 4 has a locking state and an unlocking state. When the first locking mechanism is in the locking state, as shown in FIG. 25, the third locking member 44 hooks the middle lock rod 444. When the first locking mechanism is in the unlocking state, as shown in FIG. 27 and FIG. 28, the third locking member 44 is detached from the middle lock rod 444, allowing the carrycot 3 to be separated from the stroller frame 10. The third elastic member 442 applies an elastic force to the third locking member 44 so that the third locking member 44 rotates around the fourth rotating shaft 441 in a direction where the middle lock rod 444 tends to be hooked. When the unlocking handle 41 is pulled, the first locking mechanism 4 switches from the locking state to the unlocking state. The middle portion of the stroller frame 10 is provided with a slot 445 extending along an up-down direction, as shown in FIG. 25 and FIG. 27. The carrycot 3 is provided with an insert block 446 fitting the slot 445, the insert block 446 is inserted into the slot 445, the third locking member 44 is located in the slot 445, and the middle lock rod 444 is also located in the slot 445. When the child stroller with the stroller frame in the folded state is required to switch to the pushing state, the first locking mechanism 4 is first unlocked, the first locking member 42 is detached from the second transverse rod/the rear wheel axle 221 or the rear wheel bracket 22, and the second locking member 43 is detached from the front wheel bracket 21, so that the stroller frame 2 can be transformed from the folded state to the unfolded state. When the stroller frame 2 is completely unfolded, the third locking member 44 of the first locking mechanism 4 hooks the middle lock rod 444, and the second locking mechanism 5 is in the locked state. Multiple locking when the carrycot 3 is locked to the stroller frame 2 can further improve the safety of the child stroller.

"Rotatably connected" in this embodiment is specifically rotatably connected by a pivot, which may alternatively be another connection manner in some other embodiments and is not specifically defined herein.

Based on the above, the automobile safety seat and the child stroller in this embodiment have at least the following technical effects.

**In** this embodiment, when the carrycot, the stroller frame and the base are combined as the automobile safety seat, the first locking mechanism, the second locking mechanism and the third locking mechanism are linked by means of the engaging and disengaging device, such that it is possible to simultaneously control a plurality of locking mechanisms by means of the operation of the unlocking handle, and thus locking and unlocking processes are simple, and the carrycot is convenient to put therein and take out therefrom. When the carrycot and the stroller frame are used as the child stroller, the carrycot can be completely locked to the stroller frame, such that the safety of the child stroller is improved, thereby reducing the risk of misuse.

When the safety mechanism is in the open state, the third locking mechanism is allowed to enter the unlocking state from the locking state. When the safety mechanism is in the closed state, the third locking mechanism is prohibited from entering the unlocking state from the locking state. When the carrycot, the stroller frame and the base are combined as the automobile safety seat, the stroller frame and the base are locked by means of the third locking mechanism, preventing a user from mistakenly mounting the carrycot directly on the base.

When the carrycot, the stroller frame and the base are combined as the automobile safety seat, the carrycot is controlled to be locked to the folded stroller frame by means of the first locking mechanism, and the stroller frame is locked to the base by means of the third locking mechanism. The structure is simple, locking and unlocking processes are simple, and the carrycot is convenient to put therein and take out therefrom.

When the carrycot, the stroller frame and the base are combined as the automobile safety seat, locking and unlocking of the carrycot and the folded stroller frame are controlled by means of the first locking mechanism. The operation is simple, and the carrycot is convenient to put therein and take out therefrom.

When the carrycot and the stroller frame are used as the child stroller, the carrycot can be completely locked to the stroller frame, such that the safety of the child stroller is improved, thereby reducing the risk of misuse.

As shown in this specification and claims, the terms "comprise" and "include" only imply the inclusion of clearly identified steps and elements, and these steps and elements do not constitute an exclusive list. The method or device may also include other steps or elements. As used herein, the term "and/or" includes any combination of one or more of the associated listed items.

The indefinite articles "a" and "an" preceding an element or ingredient herein are intended to indicate, without limitation, a number of instances (i.e., occurrences) of the stated element or ingredient, unless the context clearly indicates otherwise. Therefore, "a" and "an" should be understood as including one or at least one, and the singular form of the element or ingredient also includes the plural form.

It is to be noted that unless otherwise specified, when a feature is referred to be "fixed" or "connected" to another feature, it may be directly fixed or connected to the another feature, or it may be indirectly fixed or connected to the another feature. In addition, descriptions such as up, down, left, and right used in the present disclosure are only relative to the mutual positional relationship of the various components of the present disclosure in the drawings.

Further, it may be understood that the terms "first", "second", and the like are used to describe various information, but the information should not be limited to these terms. These terms are only used to distinguish information of a same type from each other and do not imply a specific order or importance. In fact, expressions such as "first" and "second" can be used interchangeably. For example, without departing from the scope of the present disclosure, first information may also be called second information, and similarly, the second information may also be called the first information.

The above implementation is only intended to illustrate the technical concept and characteristics of the present disclosure, and is a preferred embodiment, with a purpose of enabling those skilled in the art to understand the content of the present disclosure and implement it accordingly, which does not limit the scope of protection of the present disclosure.

## Claims

1. An automobile safety seat, comprising a base, a stroller frame being folded and arranged on the base, and a carrycot arranged on the stroller frame;
is **characterized in that**,
the automobile safety seat further comprises a first locking mechanism for locking the carrycot on the stroller frame being folded, a second locking mechanism also for locking the carrycot on the stroller frame being folded, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism or the second locking mechanism is independently in the locking state or the unlocking state.

2. The automobile safety seat of claim 1, is **characterized in that**, the first locking mechanism comprises:
an unlocking handle, arranged on the carrycot;
a first locking member, rotatably connected to a rear portion of the carrycot by a first rotating shaft;
a first elastic member, abutting against the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the stroller frame by a second rotating shaft;
a second elastic member, abutting against the second locking member;
a first driving member, movably arranged on a front portion of the carrycot, and the first driving member being capable of driving the second locking member to move; and
a second connecting member, two ends of the second connecting member being respectively connected to the unlocking handle and the first driving member, the unlocking handle driving the first driving member to move by the second connecting member, such that the first driving member drives the second locking member to rotate;
wherein the stroller frame comprises a front wheel bracket and a rear wheel bracket, and a lower portion of the rear wheel bracket is rotatably connected to a rear wheel by a rear wheel axle;
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member abuts against the second locking member, and the second locking member is detached from the front wheel bracket; and when the unlocking handle is pulled, the first locking mechanism switches from the locking state to the unlocking state.

3. The automobile safety seat of claim 2, is **characterized in that**, the first driving member is rotatably connected to the front portion of the carrycot by a third rotating shaft.

4. The automobile safety seat of claim 2, is **characterized in that**, the automobile safety seat further comprises the second locking mechanism also used for locking the carrycot on the stroller frame, the second locking mechanism comprises:
a first locking slider, slidably arranged at a bottom of the carrycot along a front-rear direction, a fourth locking member being arranged on a front portion of the first locking slider, and a fifth locking member being arranged on a rear portion of the first locking slider;
a fourth elastic member, abutting against the first locking slider;
a first locking rod, fixedly arranged on the front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism switches between the locking state and the unlocking state, the first locking slider slides along the bottom of the carrycot; and the fourth elastic member applies an elastic force to the first locking slider, such that the second locking mechanism tends to be switched to the locking state.

5. The automobile safety seat of claim 4, is **characterized in that**, the engaging and disengaging device is arranged between the first locking slider and the first connecting member or the unlocking handle, when the stroller frame being folded is placed on the base and the carrycot is placed on the stroller frame, the engaging and disengaging device is in the operating state of engaging, the first locking slider is connected to the first connecting member or the unlocking handle, and the unlocking handle is capable of driving the first locking slider to slide, such that the first locking mechanism and the second locking mechanism are synchronously switched from the locking state to the unlocking state or the first locking mechanism and the second locking mechanism are synchronously switched from the unlocking state to the locking state; when the first locking mechanism and the second locking mechanism are both in the unlocking state, the carrycot is allowed to be detached from the stroller frame; and after the carrycot is detached from the base along with the stroller frame, the engaging and disengaging device is in the operating state of disengaging, the first locking slider is disconnected from the first connecting member or the unlocking handle, and the unlocking handle is incapable of driving the first locking slider to slide, such that the first locking mechanism and the second locking mechanism are independently in the locking state or the unlocking state.

6. The automobile safety seat of claim 5, is **characterized in that**, the engaging and disengaging device comprises:
a sixth locking member, slidably arranged in the first locking slider along an up-down direction;
a fourth connecting member, provided with a locking hole, and the fourth connecting member being the first connecting member;
a fifth elastic member, abutting against the sixth locking member, and the fifth elastic member applying an elastic force in one direction to the sixth locking member, the elastic force in the direction causing the sixth locking member to tend to be detached from the locking hole; and
a second driving member for driving the sixth locking member to slide in a direction of insertion into the locking hole;
wherein when the carrycot is placed on the base along with the stroller frame being folded, the second driving member pushes the sixth locking member to slide upward, such that one part of the sixth locking member is inserted into the locking hole in the fourth connecting member and the other part of the sixth locking member is still located in the first locking slider, and the engaging and disengaging device is in the operating state of engaging; and after the carrycot is detached from the base along with the stroller frame, the sixth locking member slides downward under the elastic force of the fifth elastic member, the sixth locking member is detached from the locking hole in the fourth connecting member, and the engaging and disengaging device is in the operating state of disengaging.

7. The automobile safety seat of claim 6, is **characterized in that**, the stroller frame further comprises a carrycot tray, the carrycot tray is connected to the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along the up-down direction, an upper end of the trigger push rod is oriented toward a lower end of the sixth locking member; when the carrycot is placed on the base along with the stroller frame, a lower end of the trigger push rod contacts an upper surface of the base, causing the trigger push rod to move upward, the trigger push rod also pushes the sixth locking member to move upward and be inserted into the locking hole, and the engaging and disengaging device is in the operating state of engaging; and after the carrycot is detached from the base along with the stroller frame, the sixth locking member slides downward under the elastic force of the fifth elastic member, the lower end of the trigger push rod is pushed to protrude out of a lower bottom surface of the carrycot tray downwardly, and the engaging and disengaging device is in the operating state of disengaging.

8. The automobile safety seat of claim 7, is **characterized in that**, the trigger push rod further abuts against a sixth elastic member, the sixth elastic member applying an elastic force to the trigger push rod such that the lower end of the trigger push rod tends to protrude towards the bottom of the carrycot tray.

9. The automobile safety seat of claim 6, is **characterized in that**, each of the first locking member, the second locking member, the fourth locking member, the fifth locking member and the sixth locking member comprise a locking hook.

10. The automobile safety seat of claim 2, is **characterized in that**, at least two front wheel brackets and at least two rear wheel brackets on left and right sides are respectively provided, the front wheel bracket further comprises a first transverse rod used for connecting the two front wheel brackets on the left and right sides, a locking groove is arranged on the first transverse rod, when the first locking mechanism is in the locking state, the second locking member is hooked in the locking groove, and when the first locking mechanism is in the unlocking state, the second locking member is detached from the locking groove.

11. The automobile safety seat of claim 2, is **characterized in that**, the stroller frame further comprises a carrycot tray, the carrycot tray being connected to the front wheel bracket and/or the rear wheel bracket, the carrycot is arranged on the carrycot tray, and at least part of the carrycot is located above the carrycot tray; and the automobile safety seat further comprises a third locking mechanism used for locking the stroller frame on the base, the third locking mechanism comprises:
a second locking slider, slidably arranged at a bottom of the carrycot tray along a front-rear direction, a seventh locking member being arranged on a front portion of the second locking slider;
a third driving member for driving the second locking slider to slide in the carrycot tray along the front-rear direction;
a seventh elastic member, abutting against the second locking slider;
a third locking rod, extending along a left-right direction and fixedly arranged on a front portion of the base;
an eighth locking member, rotatably connected to a rear portion of the base by a fifth rotating shaft;
an eighth elastic member, abutting against the eighth locking member; and
a fifth connecting member, a front portion of the fifth connecting member being connected to the second locking slider, and a rear portion of the fifth connecting member being connected to the eighth locking member;
wherein the third locking mechanism has a locking state and an unlocking state, and when the third locking mechanism is in the locking state, the seventh locking member hooks the third locking rod, and the eighth locking member hooks the rear wheel axle or the rear wheel bracket; and when the third locking mechanism is in the unlocking state, the seventh locking member is detached from the third locking rod, and the eighth locking member is detached from the rear wheel axle or the rear wheel bracket.

12. The automobile safety seat of claim 11, is **characterized in that**, each of the seventh locking member and the eighth locking member comprise a locking hook.

13. The automobile safety seat of claim 11, is **characterized in that**, a front lower portion of the seventh locking member has a guide slope, the guide slope is parallel to the third locking rod and the guide slope tilts forward gradually from top to bottom and, and the seventh locking member is located on a front lower side of the third locking rod.

14. The automobile safety seat of claim 11, is **characterized in that**, a safety mechanism is arranged on the second locking slider, when the safety mechanism is in an open state, the second locking slider is allowed to slide such that the third locking mechanism switches to the unlocking state from the locking state, and when the safety mechanism is in a closed state, the second locking slider is prohibited from sliding such that the third locking mechanism is in the locking state.

15. The automobile safety seat of claim 14, is **characterized in that**, the safety mechanism comprises:
a stop rod, slidably inserted into the carrycot tray along an up-down direction; and
a stop rod elastic member, abutting against the stop rod, and the stop rod elastic member applying an elastic force to the stop rod such that the stop rod tends to slide upward;
wherein when the safety mechanism is in the closed state, an upper end of the stop rod extrudes out of an upper surface of the carrycot tray upwardly, and a side portion of the stop rod blocks sliding of the second locking slider; and when the safety mechanism is in the open state, the upper end of the stop rod is retracted into the upper surface of the carrycot tray, and the side portion of the stop rod is located below the second locking slider and allows the second locking slider to slide.

16. The automobile safety seat of claim 15, is **characterized in that**, the carrycot has two operating states of detaching from the carrycot tray and mounting on the carrycot tray; after the carrycot is detached from the carrycot tray, the safety mechanism is in the closed state, and the upper end of the stop rod extrudes out of the upper surface of the carrycot tray upwadly; and after the carrycot is mounted on the carrycot tray, a bottom surface of the carrycot presses down the upper end of the stop rod to make the stop rod slide downward, and the safety mechanism is in the open state.

17. The automobile safety seat of claim 2, is **characterized in that**, the first connecting member and the second connecting member are both flexible plastic straps; and the unlocking handle is slidably arranged on a front lower portion of the carrycot.

18. An automobile safety seat, comprising a base, a stroller frame being folded and arranged on the base, a carrycot arranged on the stroller frame, and a third locking mechanism for locking the stroller frame being folded on the base, is **characterized in that**, the third locking mechanism has a locking state and an unlocking state, when the third locking mechanism is in the locking state, the stroller frame is prohibited from being separated from the base, and when the third locking mechanism is in the unlocking state, the stroller frame is allowed to be separated from the base; wherein the third locking mechanism is further provided with a safety mechanism, when the safety mechanism is in an open state, the third locking mechanism is allowed to be switched to the unlocking state from the locking state, and when the safety mechanism is in a closed state, the third locking mechanism is prohibited from being switched to the unlocking state from the locking state.

19. The automobile safety seat of claim 18, is **characterized in that**, the stroller frame further comprises a front wheel bracket and a rear wheel bracket, the stroller frame being folded further comprises a carrycot tray, the carrycot tray is connected to the front wheel bracket and/or the rear wheel bracket, the carrycot is detachably arranged on the carrycot tray, and at least part of the carrycot is located above the carrycot tray.

20. The automobile safety seat of claim 19, is **characterized in that**, the third locking mechanism has a second locking slider, the second locking slider being slidably arranged at a bottom of the carrycot tray along a front-rear direction; when the second locking slider slides forward or backward along the carrycot tray, the third locking mechanism switches between the locking state and the unlocking state; and the safety mechanism is arranged on the carrycot tray, when the safety mechanism is in the open state, the second locking slider is allowed to slide such that the third locking mechanism is switched to the unlocking state from the locking state, and when the safety mechanism is in the closed state, the second locking slider is prohibited from sliding such that the third locking mechanism is in the locking state.

21. The automobile safety seat of claim 20, is **characterized in that**, the safety mechanism comprises:
a stop rod, slidably inserted into the carrycot tray along an up-down direction; and
a stop rod elastic member, connected to the stop rod, and the stop rod elastic member applying an elastic force to the stop rod such that the stop rod tends to slide upward;
wherein when the safety mechanism is in the closed state, an upper end of the stop rod upwardly extrudes out of an upper surface of the carrycot tray, and a side portion of the stop rod blocks sliding of the second locking slider; and when the safety mechanism is in the open state, the upper end of the stop rod is retracted into the upper surface of the carrycot tray, and the side portion of the stop rod is located below the second locking slider and allows the second locking slider to slide.

22. The automobile safety seat of claim 21, is **characterized in that**, the carrycot has two operating states of detaching from the carrycot tray and mounting on the carrycot tray; after the carrycot is detached from the carrycot tray, the safety mechanism is in the closed state, and the upper end of the stop rod upwardly extrudes out of the upper surface of the carrycot tray; and after the carrycot is mounted on the carrycot tray, a bottom surface of the carrycot presses down the upper end of the stop rod to slide the stop rod downward, and the safety mechanism is in the open state.

23. The automobile safety seat of claim 20, is **characterized in that**, the third locking mechanism further comprises:
a seventh locking member, located in a front portion of the second locking slider;
a seventh elastic member, connected to the second locking slider;
a third locking rod, extending along a left-right direction and being fixedly arranged on a front portion of the base;
an eighth locking member, rotatably connected to a rear portion of the base by a fifth rotating shaft;
an eighth elastic member, connected to the eighth locking member; and
a fifth connecting member, a front portion of the fifth connecting member being connected to the second locking slider, and a rear portion of the fifth connecting member being connected to the eighth locking member; and
the stroller frame comprises a front wheel bracket and a rear wheel bracket, and a lower portion of the rear wheel bracket being rotatably connected to a rear wheel by a rear wheel axle;
wherein when the third locking mechanism is in the locking state, the seventh locking member hooks the third locking rod, the eighth locking member hooks the rear wheel axle or the rear wheel bracket, and the stroller frame is locked on the base; and when the third locking mechanism is in the unlocking state, the seventh locking member is detached from the third locking rod, and the eighth locking member is detached from the rear wheel axle or the rear wheel bracket, to allow the stroller frame to be detached from the base.

24. The automobile safety seat of claim 23, is **characterized in that**, each of the seventh locking member and the eighth locking member comprise a locking hook.

25. The automobile safety seat of claim 18, is **characterized in that**, the automobile safety seat further comprises a first locking mechanism for locking the carrycot on the stroller frame being folded, the first locking mechanism comprises:
an unlocking handle, arranged on the carrycot;
a first locking member, rotatably connected to a rear portion of the carrycot by means of a first rotating shaft;
a first elastic member, connected to the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the carrycot by a second rotating shaft;
a second elastic member, connected to the second locking member;
a first driving member, movably arranged on the front portion of the carrycot; and
a second connecting member, two ends of the second connecting member being respectively connected to the unlocking handle and the first driving member, the unlocking handle driving the first driving member to move by the second connecting member, such that the first driving member also drives the second locking member to rotate;
wherein the stroller frame comprises a front wheel bracket and a rear wheel bracket, and a lower portion of the rear wheel bracket is rotatably connected to a rear wheel by a rear wheel axle;
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member is connected to the second locking member, and the second locking member is detached from the front wheel bracket; and when the unlocking handle is pulled, the first locking mechanism is switched from the locking state to the unlocking state.

26. The automobile safety seat of claim 25, is **characterized in that**, the first driving member is rotatably connected to the front portion of the carrycot by a third rotating shaft.

27. The automobile safety seat of claim 25, is **characterized in that**, the automobile safety seat further comprises a second locking mechanism also for locking the carrycot on the stroller frame, the second locking mechanism comprises:
a first locking slider, slidably arranged at the bottom of the carrycot along a front-rear direction, a fourth locking member is arranged on a front portion of the first locking slider, and a fifth locking member is arranged on a rear portion of the first locking slider;
a fourth elastic member, connected to the first locking slider;
a first locking rod, fixedly arranged on a front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism is switched between the locking state and the unlocking state, the first locking slider slides along the bottom of the carrycot; and the fourth elastic member applies an elastic force to the first locking slider, such that the second locking mechanism tends to be switched to the locking state.

28. The automobile safety seat of claim 27, is **characterized in that**, an engaging and disengaging device is arranged between the first locking slider and the first connecting member or the unlocking handle, when the stroller frame being folded is placed on the base and the carrycot is placed on the stroller frame, the engaging and disengaging device is in an operating state of engaging, the first locking slider is connected to the first connecting member or the unlocking handle, and the unlocking handle drives the first locking slider to slide, such that the first locking mechanism and the second locking mechanism are synchronously switched from the locking state to the unlocking state or the first locking mechanism and the second locking mechanism are synchronously switched from the unlocking state to the locking state; when the first locking mechanism and the second locking mechanism are both in the unlocking state, the carrycot is allowed to be detached from the stroller frame; and after the stroller frame drives the carrycot to be detached from the base, the engaging and disengaging device is in an operating state of disengaging, the first locking slider is disconnected from the first connecting member or the unlocking handle, and the unlocking handle is incapable of driving the first locking slider to slide, such that the first locking mechanism and the second locking mechanism are independently in the locking state or the unlocking state, and when the second locking mechanism is in the locking state, the carrycot is incapable of being detached from the stroller frame.

29. The automobile safety seat of claim 28, is **characterized in that**, the engaging and disengaging device comprises:
a sixth locking member, slidably arranged in the first locking slider along an up-down direction;
a fourth connecting member, provided with a locking hole, and the fourth connecting member being the first connecting member;
a fifth elastic member, connected to the sixth locking member, and the fifth elastic member applying an elastic force in one direction to the sixth locking member, the elastic force in the direction causing the sixth locking member to tend to be detached from the locking hole; and
a second driving member, for driving the sixth locking member to slide in a direction of insertion into the locking hole;
wherein when the stroller frame being folded drives the carrycot to be placed on the base, the second driving member pushes the sixth locking member to slide upward, such that one part of the sixth locking member is inserted into the locking hole in the fourth connecting member and the other part of the sixth locking member is still located in the first locking slider, and the engaging and disengaging device is in the operating state of engaging; and after the stroller frame drives the carrycot to be detached from the base, the sixth locking member slides downward under the elastic force of the fifth elastic member, the sixth locking member is detached from the locking hole in the fourth connecting member, and the engaging and disengaging device is in the operating state of disengaging.

30. The automobile safety seat of claim 29, is **characterized in that**, each of the first locking member, the second locking member, the fourth locking member, the fifth locking member and the sixth locking member comprise a locking hook.

31. The automobile safety seat of claim 29, is **characterized in that**, the stroller frame further comprises a carrycot tray, the carrycot tray is connected to and arranged above the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along the up-down direction, an upper end of the trigger push rod is oriented toward a lower end of the sixth locking member; when the stroller frame drives the carrycot to be placed on the base, a lower end of the trigger push rod is extruded by an upper surface of the base, causing the trigger push rod to move upward, the trigger push rod also pushes the sixth locking member to move upward and be inserted into the locking hole, and the engaging and disengaging device is in the operating state of engaging; and after the stroller frame drives the carrycot to be detached from the base, the sixth locking member slides downward under the elastic force of the fifth elastic member, the lower end of the trigger push rod is pushed to downwardly extend out of a lower bottom surface of the carrycot tray, and the engaging and disengaging device is in the operating state of disengaging.

32. The automobile safety seat of claim 31, is **characterized in that**, the trigger push rod is further connected to a sixth elastic member, the sixth elastic member applying an elastic force to the trigger push rod so that the lower end of the trigger push rod tends to protrude towards the bottom of the carrycot tray.

33. The automobile safety seat of claim 25, is **characterized in that**, the stroller frame comprises at least two front wheel brackets on left and right sides respectively and at least two rear wheel brackets on the left and right sides respectively, the front wheel bracket further comprises a first transverse rod for connecting the two front wheel brackets on the left and right sides, a locking groove is arranged on the first transverse rod, when the first locking mechanism is in the locking state, the second locking member is hooked in the locking groove, and when the first locking mechanism is in the unlocking state, the second locking member is detached from the locking groove.

34. The automobile safety seat of claim 25, is **characterized in that**, the first connecting member and the second connecting member are both flexible plastic straps; and the unlocking handle is slidably arranged on a front lower portion of the carrycot.

35. An automobile safety seat, comprising a base, a stroller frame being folded and arranged on the base, and a carrycot arranged on the stroller frame; wherein the stroller frame comprises a front wheel bracket and a rear wheel bracket, at least two front wheel brackets and at least two rear wheel brackets on left and right sides are respectively provided, the front wheel bracket further comprises a first transverse rod for connecting the two front wheel brackets on the left and right sides, and the rear wheel bracket further comprises a second transverse rod for connecting the two rear wheel brackets on the left and right sides; is **characterized in that**, the automobile safety seat further comprises a first locking mechanism for locking the carrycot on the stroller frame being folded and a third locking mechanism for locking the stroller frame on the base; the first locking mechanism comprises:
an unlocking handle, arranged on the carrycot;
a first locking member, rotatably connected to a rear portion of the carrycot by a first rotating shaft;
a first elastic member, connected to the first locking member; and
a first connecting member, two ends of the first connecting member being respectively connected to the unlocking handle and the first locking member, the unlocking handle driving the first locking member to rotate by the first connecting member;
wherein the first locking mechanism has a locking state and an unlocking state, and when the first locking mechanism is in the locking state, the first locking member is hooked to the second transverse rod; when the first locking mechanism is in the unlocking state, the first locking member is detached from the second transverse rod; the first elastic member applies an elastic force to the first locking member, such that the first locking member rotates around the first rotating shaft in a direction where the second transverse rod tends to be hooked; and when the unlocking handle is pulled, the first locking mechanism is switched from the locking state to the unlocking state;
the third locking mechanism comprises:
an eighth locking member, rotatably connected to a rear portion of the base by a fifth rotating shaft;
an eighth elastic member, connected to the eighth locking member; and
a fourth driving member, connected to or in contact with the eighth locking member, and for driving the eighth locking member to rotate;
wherein the third locking mechanism has a locking state and an unlocking state, and when the third locking mechanism is in the locking state, the eighth locking member is hooked to the second transverse rod; when the third locking mechanism is in the unlocking state, the eighth locking member is detached from the second transverse rod; the eighth elastic member applies an elastic force that tends to hook the second transverse rod to the eighth locking member; and when the fourth driving member drives the eighth locking member to rotate, the third locking mechanism is switched from the locking state to the unlocking state.

36. The automobile safety seat of claim 35, is **characterized in that**, the first locking member is located on a rear side of the second transverse rod, and the eighth locking member is located on a front side of the second transverse rod; and a lower portion of the rear wheel bracket is rotatably connected to a rear wheel by a rear wheel axle, and the second transverse rod is the rear wheel axle.

37. The automobile safety seat of claim 35, is **characterized in that**, the first locking mechanism and the third locking mechanism are the first locking mechanism and the third locking mechanism of any one of claims 1 to 17.

38. The automobile safety seat of claim 35, is **characterized in that**, the automobile safety seat further comprises a second locking mechanism also for locking the carrycot on the stroller frame being folded, the second locking mechanism comprises a first locking slider, the first locking slider is slidably arranged at the bottom of the carrycot along a front-rear direction; an engaging and disengaging device is arranged between the first locking slider and the first connecting member or the unlocking handle; and the second locking mechanism and the engaging and disengaging device are the second locking mechanism and the engaging and disengaging device of any one of claims 1 to 17.

39. An automobile safety seat, comprising a base, a stroller frame being folded and arranged on the base, and a carrycot arranged on the stroller frame; the stroller frame comprises a front wheel bracket and a rear wheel bracket, a lower portion of the rear wheel bracket is connected to a rear wheel by a rear wheel axle; is **characterized in that**, the automobile safety seat further comprises a first locking mechanism for locking the carrycot on the stroller frame being folded; the first locking mechanism comprises:
an unlocking handle, arranged on the carrycot;
a first locking member, rotatably connected to a rear portion of the carrycot by a first rotating shaft;
a first elastic member, connected to the first locking member;
a first connecting member, two ends of the first connecting member being respectively connected to the unlocking handle and the first locking member, the unlocking handle driving the first locking member to rotate by the first connecting member,;
a second locking member, rotatably connected to a front portion of the stroller frame by a second rotating shaft;
a second elastic member, connected to the second locking member;
a first driving member, movably arranged on a front portion of the carrycot, and the first driving member being capable of driving the second locking member to move;
a second connecting member, two ends of the second connecting member being respectively connected to the unlocking handle and the first driving member, the unlocking handle driving the second locking member to rotate by the second connecting member and the first driving member;
a third locking member, rotatably connected to a middle portion of the carrycot by a fourth rotating shaft;
a third elastic member, connected to the third locking member; and
a third connecting member, two ends of the third connecting member being respectively connected to the unlocking handle and the third locking member, the unlocking handle driving the third locking member to rotate by the third connecting member;
wherein the first locking mechanism has a locking state and an unlocking state, and when the first locking mechanism is in the locking state, the first locking member hooks the rear wheel axle or the rear wheel bracket, and the second locking member hooks the front wheel bracket; when the first locking mechanism is in the unlocking state, the first locking member is detached from the rear wheel axle or the rear wheel bracket, the first driving member is connected to the second locking member, and the second locking member is detached from the front wheel bracket; and when the unlocking handle is pulled, the first locking mechanism is switched from the locking state to the unlocking state.

40. The automobile safety seat of claim 39, is **characterized in that**, the automobile safety seat further comprises a second locking mechanism also for locking the carrycot on the stroller frame, the second locking mechanism comprises a first locking slider, the first locking slider is slidably arranged at the bottom of the carrycot along a front-rear direction; an engaging and disengaging device is arranged between the first locking slider and the first connecting member or the unlocking handle; and the second locking mechanism and the engaging and disengaging device are the second locking mechanism and the engaging and disengaging device of any one of claims 1 to 17.

41. The automobile safety seat of claim 39, is **characterized in that**, the stroller frame further comprises a carrycot tray, the carrycot tray is connected to the front wheel bracket and/or the rear wheel bracket, the carrycot is arranged on the carrycot tray, and at least part of the carrycot is located above the carrycot tray; and the automobile safety seat further comprises a third locking mechanism for locking the stroller frame on the base, the third locking mechanism is the third locking mechanism of any one of claims 1 to 17.

42. An assembling and disassembling method for a carrycot of an automobile safety seat, is **characterized in that**, the automobile safety seat comprises a base, a stroller frame being folded and arranged on the base, a carrycot arranged on the stroller frame, a first locking mechanism for locking the carrycot on the stroller frame being folded, a second locking mechanism also for locking the carrycot on the stroller frame being folded, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism and the second locking mechanism are independently in the locking state or the unlocking state;
the assembling and disassembling method for a carrycot comprises: switching the third locking mechanism to a locking state, synchronously unlocking the first locking mechanism and the second locking mechanism, and then removing the carrycot from the stroller frame; wherein after the carrycot is removed from the stroller frame, the engaging and disengaging device is in the operating state of disengaging.

43. The assembling and disassembling method for a carrycot of an automobile safety seat of claim 42, is **characterized in that**, the automobile safety seat is the automobile safety seat of any one of claims 1 to 17.

44. An assembling and disassembling method for a stroller frame and a carrycot of an automobile safety seat, is **characterized in that**, the automobile safety seat comprises a base, a stroller frame being folded and arranged on the base, a carrycot arranged on the stroller frame, a first locking mechanism for locking the carrycot on the stroller frame being folded, a second locking mechanism also for locking the carrycot on the stroller frame being folded, and a third locking mechanism for locking the stroller frame on the base, wherein an engaging and disengaging device is arranged between the first locking mechanism and the second locking mechanism, when the engaging and disengaging device is in an operating state of engaging, the first locking mechanism and the second locking mechanism are connected such that the first locking mechanism and the second locking mechanism are synchronously in a locking state or an unlocking state, and when the engaging and disengaging device is in an operating state of disengaging, the first locking mechanism and the second locking mechanism are disconnected such that the first locking mechanism and the second locking mechanism are independently in the locking state or the unlocking state;
the assembling and disassembling method for a stroller frame and a carrycot comprises: switching the third locking mechanism to an unlocking state, and then removing the stroller frame and the carrycot from the base; wherein after the stroller frame and the carrycot are removed from the base, the engaging and disengaging device is in the operating state of disengaging.

45. The assembling and disassembling method for a stroller frame and a carrycot of an automobile safety seat of claim 44, is **characterized in that**, the automobile safety seat is the automobile safety seat of any one of claims 1 to 17.

46. A child stroller, comprising a stroller frame having an unfolded state and a folded state, and a carrycot arranged on the stroller frame; the stroller frame comprising a front wheel bracket and a rear wheel bracket; is **characterized in that**, the child stroller further comprises a first locking mechanism for locking the carrycot on the stroller frame being folded, and a second locking mechanism also for locking the carrycot on the stroller frame being folded, wherein an engaging and disengaging device is arranged between the first locking mechanism and the second locking mechanism, and when the engaging and disengaging device is in an operating state of disengaging, the first locking mechanism and the second locking mechanism are disconnected such that the first locking mechanism and the second locking mechanism are independently in a locking state or an unlocking state.

47. The child stroller of claim 46, is **characterized in that**, the first locking mechanism comprises:
an unlocking handle, arranged on the carrycot;
a first locking member, rotatably connected to a rear portion of the carrycot by a first rotating shaft;
a first elastic member, abutting against the first locking member;
a first connecting member, two ends of the first connecting member being respectively connected to the unlocking handle and the first locking member, the unlocking handle driving the first locking member to rotate by the first connecting member;
a second locking member, rotatably connected to a front portion of the stroller frame by a second rotating shaft;
a second elastic member, abutting against the second locking member;
a first driving member, movably arranged on a front portion of the carrycot, and the first driving member being capable of driving the second locking member to move; and
a second connecting member, two ends of the second connecting member being respectively connected to the unlocking handle and the first driving member, the unlocking handle driving the second locking member to rotate by the second connecting member and the first driving member; and
a lower portion of the rear wheel bracket is rotatably connected to a rear wheel by a rear wheel axle, and a front wheel is arranged on a lower portion of the front wheel bracket;
wherein the first locking mechanism has a locking state and an unlocking state, and when the stroller frame is in an operating state of folding and the first locking mechanism is in the locking state, the first locking member hooks the rear wheel axle or the rear wheel bracket, and the second locking member hooks the front wheel bracket; when the first locking mechanism is in the unlocking state, the stroller frame is allowed to be in an operating state of unfolding, the first locking member is detached from the rear wheel axle or the rear wheel bracket, the first driving member abuts against the second locking member, and the second locking member is detached from the front wheel bracket; and when the unlocking handle is pulled, the first locking mechanism is switched from the locking state to the unlocking state.

48. The child stroller of claim 47, is **characterized in that**, the first driving member is rotatably connected to the front portion of the carrycot by a third rotating shaft.

49. The child stroller of claim 47, is **characterized in that**, the second locking mechanism comprises:
a first locking slider, slidably arranged at a bottom of the carrycot along a front-rear direction, a front portion of the first locking slider being provided with a fourth locking member, and a rear portion of the first locking slider being provided with a fifth locking member;
a fourth elastic member, abutting against the first locking slider;
a first locking rod, fixedly arranged on the front portion of the stroller frame and extending along a left-right direction; and
a second locking rod, fixedly arranged on a rear portion of the stroller frame and extending along the left-right direction;
wherein the second locking mechanism has a locking state and an unlocking state, and when the second locking mechanism is in the locking state, the fourth locking member hooks the first locking rod, and the fifth locking member locks the second locking rod; when the second locking mechanism is in the unlocking state, the fourth locking member is detached from the first locking rod, and the fifth locking member is detached from the second locking rod; when the second locking mechanism is switched between the locking state and the unlocking state, the first locking slider slides along the bottom of the carrycot; and the fourth elastic member applies an elastic force to the first locking slider, such that the second locking mechanism tends to be switched to the locking state.

50. The child stroller of claim 49, is **characterized in that**, the engaging and disengaging device is arranged between the first locking slider and the unlocking handle or the first connecting member and when the engaging and disengaging device is in the operating state of engaging, the first locking mechanism and the second locking mechanism are connected such that the first locking mechanism and the second locking mechanism are synchronously in the locking state or the unlocking state.

51. The child stroller of claim 47, is **characterized in that**, the first locking mechanism further comprises:
a third locking member, rotatably connected to a middle portion of the carrycot by a fourth rotating shaft;
a third elastic member, connected to the third locking member; and
a third connecting member, two ends of the third connecting member being respectively connected to the unlocking handle and the third locking member, the unlocking handle driving the third locking member to rotate by the third connecting member;
wherein when the stroller frame is in the unfolded state and the carrycot is arranged on the stroller frame being unfolded, the third locking member locks the carrycot on the stroller frame.

52. The child stroller of claim 50, is **characterized in that**, the engaging and disengaging device comprises:
a sixth locking member, slidably arranged in the first locking slider along an up-down direction;
a fourth connecting member, provided with a locking hole, and the fourth connecting member being the first connecting member;
a fifth elastic member, abutting against the sixth locking member, and the fifth elastic member applying an elastic force in one direction to the sixth locking member, the elastic force in the direction causing the sixth locking member to tend to be detached from the locking hole; and
a second driving member, for driving the sixth locking member to slide in a direction of insertion into the locking hole;
wherein when the second driving member pushes the sixth locking member to slide upward, one part of the sixth locking member is inserted into the locking hole in the fourth connecting member and the other part of the sixth locking member is still located in the first locking slider, and the engaging and disengaging device is in the operating state of engaging; and the sixth locking member slides downward under the elastic force of the fifth elastic member, the sixth locking member is detached from the locking hole in the fourth connecting member, and the engaging and disengaging device is in the operating state of disengaging.

53. The child stroller of claim 52, is **characterized in that**, the stroller frame further comprises a carrycot tray connected to the front wheel bracket and/or the rear wheel bracket, the carrycot is arranged on the carrycot tray, and at least part of the carrycot is located above the carrycot tray; the second driving member is a trigger push rod, the trigger push rod is slidably arranged on the carrycot tray along an up-down direction, an upper end of the trigger push rod is oriented toward a lower end of the sixth locking member; when the trigger push rod moves upward, the trigger push rod also pushes the sixth locking member to move upward and be inserted into the locking hole, and the engaging and disengaging device is in the operating state of engaging; and when the sixth locking member slides downward under the elastic force of the fifth elastic member, the lower end of the trigger push rod is pushed to downwardly extrude out of a lower bottom surface of the carrycot tray, and the engaging and disengaging device is in the operating state of disengaging.

54. The child stroller of claim 53, is **characterized in that**, the trigger push rod further abuts against a sixth elastic member, the sixth elastic member is configured to apply an elastic force to the trigger push rod such that the lower end of the trigger push rod tends to protrude towards the bottom of the carrycot tray.

55. The child stroller of claim 54, is **characterized in that**, the stroller frame comprises at least two front wheel brackets on left and right sides respectively and at least two rear wheel brackets on the left and right sides respectively, the front wheel bracket further comprises a first transverse rod for connecting the two front wheel brackets on the left and right sides, a locking groove is arranged on the first transverse rod, when the first locking mechanism is in the locking state, the second locking member is hooked in the locking groove, and when the first locking mechanism is in the unlocking state, the second locking member is detached from the locking groove.

56. The child stroller of claim 55, is **characterized in that**, the first connecting member and the second connecting member are both flexible plastic straps; and the unlocking handle is slidably arranged on a front lower portion of the carrycot.
